# EUROPÄISCHE PATENTSCHRIFT

(11) **EP 2 786 649 B1**
(45) Veröffentlichungstag und Bekanntmachung des Hinweises auf die Patenterteilung: **08.06.2016**
(21) Anmeldenummer: 14000350.0
(22) Anmeldetag: 30.01.2014
(51) Int. Cl.: A01C 7/08, A01C 7/12

(54) **Dosiereinheit für eine Verteilmaschine und mit einer solchen Dosiereinheit ausgestattete Verteilmaschine**
Metering unit for a distribution machine and a sorting machine fitted with such a metering unit
Unité de dosage pour une machine de distribution et machine de distribution équipée d'une telle unité de dosage

(30) Priorität: 05.04.2013 DE 102013005733
(43) Veröffentlichungstag der Anmeldung: 08.10.2014
(73) Patentinhaber: RAUCH Landmaschinenfabrik GmbH, 76547 Sinzheim (DE)
(72) Erfinder: Boos, Florian, D-76547 Sinzheim (DE); Schickinger, Manfred, D-76547 Sinzheim (DE); Boos, Daniel, D-76547 Sinzheim (DE)
(74) Vertreter: Lichti - Patentanwälte Partnerschaft mbB

(56) Entgegenhaltungen:
- DE-A1- 4 445 313
- DE-C- 446 079
- JP-A- 2010 193 789
- JP-A- 2011 188 796

## Beschreibung

Die Erfindung betrifft eine Dosiereinheit für eine Verteilmaschine, insbesondere in Form einer Streu- und/oder Sämaschine, mit einer drehangetriebenen Nockenwalze, zwischen deren in Axialrichtung nebeneinander angeordneten Nockenbergen axiale Zwischenräume gebildet sind und welche in einem Dosiergehäuse mit einem an dessen Oberseite angeordneten Einlass und einer an dessen Unterseite angeordneten Auslass gelagert ist. Die Erfindung bezieht sich ferner auf eine Verteilmaschine, insbesondere in Form einer Streu- und/oder Sämaschine, mit wenigstens einem Vorratsbehälter, wenigstens einer unterhalb des Vorratsbehälters angeordneten Dosiereinheit der vorgenannten Art sowie wenigstens einem der Dosiereinheit nachgeordneten Verteilorgan.

Derartige Dosiereinheiten finden insbesondere in pneumatischen Düngerstreuern, sogenannten Gebläsestreuern, Verwendung. Solche pneumatischen Düngestreuer existieren einerseits in leichter Bauart als Anbaugeräte, welche mit dem Dreipunkt einer Zugmaschine, wie eines Traktors, gekoppelt werden können, anderseits können sie in schwerer Bauart auf einen achsgestützten Nachläufer oder einen Selbstfahrer aufgesetzt sein. Sie umfassen üblicherweise eine Mehrzahl an seitlich nach außen ragende Ausleger, welche in unterschiedlichem Abstand voneinander endende Streuleitungen aufnehmen. Zur Förderung des Streugutes dient ein Gebläse, dessen Druckleitung sich an den Auslass einer jeweiligen Dosiereinheit anschließt und in einem Druckverteiler mündet, an welchen sich mehrere Streuleitungen anschließen. Zwischen dem Druckverteiler und den Streuleitungen angeordnete Injektoren dienen zur Übergabe des Streugutes von den Dosiereinheiten an die Streuleitungen, um sicherzustellen, dass jeder Streuleitung dieselbe Menge an Streugut aufgegeben wird. Das Streugut wird schließlich pneumatisch über die nach außen umgelenkten Streuleitungen bis zu deren Ende gefördert, wo das Streugut auf Verteilorgane, welche üblicherweise von Prallplatten gebildet sind, auftrifft und von dort im Wesentlichen fächerförmig auf dem Boden abgelegt wird. Der Hauptvorteil solcher Pneumatikstreuer gegenüber mit Verteilerscheiben ausgestatteten Scheibenstreuer liegt insbesondere darin, dass sie über eine größere Streubreite eine gleichmäßigere Verteilung des Streugutes zu bewerkstelligen vermögen. Ein derartiger Pneumatikstreuer ist beispielsweise aus der DE 10 2004 030 240 A1 bekannt.

Zur Dosierung des Streugutes, wie beispielsweise körnigem Dünger oder anderen, z.B. zum Pflanzenschutz dienenden Granulaten, haben sich insbesondere bei Pneumatikstreuern Dosiereinheiten bewährt, welche eine drehangetriebenen Nockenwalze umfassen, die in einem Dosiergehäuse mit einem an dessen Oberseite angeordneten Einlass und einer an dessen Unterseite angeordneten Auslass gelagert ist. Durch Veränderung der Drehgeschwindigkeit der Nockenwalze lässt sich die Dosiermenge des in den zwischen den Nockenbergen angeordneten Nockentälern angereicherten Streugutes auf einfache Weise steuern. Ein mit solchen Dosiereinrichtungen ausgestatteter Pneumatikstreuer ist beispielsweise der DE 32 48 751 A1 zu entnehmen. Während der oberseitige Einlass von einer lateralen Seite in das Dosiergehäuse einmündet, mündet der unterseitige Auslass auf der dem Einlass entgegengesetzten lateralen Seite aus dem Dosiergehäuse aus, so dass das Streugut die Nockenwalze an deren Unterseite im Wesentlichen horizontal passiert, indem es die zwischen deren Nockenbergen angeordneten Nockentäler ausfüllt und infolge Rotation der Nockenwalze aus dem Dosiergehäuse in den Auslass ausgetragen wird. Durch den im Wesentlichen horizontalen Durchtritt des Streugutes durch das Dosiergehäuse wird verhindert, dass das Streugut über die Oberseite der Nockenwalze hinweg entgegen deren Drehrichtung und/oder durch die zwischen den in Axialrichtung nebeneinander angeordneten Nockenbergen gebildeten, axialen Zwischenräumen der Nockenwalze hindurch, wie sie insbesondere vorhanden sind, wenn die Nockenwalze aus einer Mehrzahl an in Axialrichtung nebeneinander angeordneten Nockenscheiben gebildet ist, in den Auslass gelangen kann, was zu einer Falschdosierung führte.

Eine Dosiereinheit nach dem Oberbegriff des Anspruchs 1 ist aus DE 446 079 bekannt. Weiterhin offenbart DE 36 42 751 A1 eine Dosiereinheit mit einer Nockenwalze, wobei nebeneinander angeordnete Nockenberge durch einen axialen Zwischenraum getrennt sind.

Nachteilig ist einerseits die sehr asymmetrische Anordnung der Nockenwalze in Bezug auf den Einlass des Dosiergehäuses, was notwendigerweise in einer gleichfalls asymmetrischen, seitlich versetzten Anordnung des Dosiergehäuses der Dosiereinrichtung in Bezug auf einen in deren Einlass mündenden Vorratsbehälter der Verteileinrichtung resultiert. Hierdurch wird nicht nur ein größerer (breiterer) Bauraum benötigt, sondern befindet sich die Dosiereinrichtung einschließlich ihrer Nockenwalze bzw. deren Nockenscheiben nicht vor mechanischen Einwirkungen geschützt unterhalb des Auslaufes des Vorratsbehälters, weshalb zusätzliche Schutzeinrichtungen vor mechanischen Stößen, Staub und Feuchtigkeit erforderlich sind, wie beispielsweise Schutzbleche, Abdeckungen und Verkleidungen.

Andererseits wäre es wünschenswert, eine derartige, für Streugut in Form von Dünger oder anderen granulatförmigen Pflanzenschutzmitteln geeignete Dosiereinrichtung auch für die Dosierung von Saatgut verwenden zu können, was bislang nicht möglich ist.

Dies hängt zum Einen damit zusammen, dass für partikuläre Düngemittel und für gleichfalls partikuläres, aber demgegenüber feinpartikuläreres sowie insbesondere gegenüber mechanischen Einwirkungen deutlich empfindlicheres Saatgut unterschiedliche Dosierwalzen erforderlich sind. So stellen für Düngemittel vornehmlich die genannten Nockenwalzen das Mittel der Wahl dar, weil die üblicherweise hygroskopischen Düngerpartikel zum Anbacken an der Dosierwalze neigen und von Dosierwalzen in Form von Zellenradwalzen zumindest während des Betriebs praktisch nicht entfernt werden können. Von Nockenwalzen hingegen lassen sich derartige Anbackungen mittels geeigneter Reinigungseinrichtungen auch während des Betriebs entfernen, wobei solche Reinigungseinrichtungen z.B. zwischen die Nockenberge der Nockenwalze und/oder zwischen einzelne Nockenräder oder -scheiben, welche die Nockenwalze bilden, eingreifende Stifte umfassen können, um anhaftende Düngerpartikel von der Nockenwalze "abkratzen" zu können. Für die präzise Dosierung von Saatgut stellen demgegenüber andersartige Dosierwalzen das Mittel der Wahl dar, wie insbesondere Zellenrad- und Zellenradsegmentwalzen sowie Loch- oder Nutenwalzen, deren Mantelfläche mit lochartigen oder, sich insbesondere in Umfangrichtung erstreckenden, nutförmigen Vertiefungen ausgestattet sind, welche das zu dosierende Saatgut schonend aufnehmen können, wobei die einzelnen Zellen der Zellenrad- oder Zellenradsegmentwalzen bzw. die Vertiefungen der Loch- oder Nutenwalzen dadurch gegen das Dosiergehäuse abgedichtet sind, dass sie gegen eine hierzu komplementäre Dichtfläche des Dosiergehäuses anliegen oder mit einem engen Spalt nach Art einer Spaltdichtung von diesem beabstandet sind.

Zum Anderen sollten die für Saatgut geeigneten Dosierwalzen der vorgenannten Art von oben mit dem Saatgut beaufschlagt werden, d.h. der Einlass des Dosiergehäuses sollte zumindest oberhalb der Drehachse der Dosierwalze angeordnet sein, um die Zellen, Löcher oder Nuten der Dosierwalze gänzlich mit Saatgut befüllen zu können, da es andernfalls zu einer Falschdosierung käme. So beschreibt beispielsweise die DE 10 2006 056 256 A1 eine solche, für eine Sämaschine vorgesehene Dosierwalze in Form einer Zellenradwalze, in deren Zellen je nach Dosierung von Normal- oder Feinsaat unterschiedliche Einsätze eingebracht werden können, um ihr Volumen zu verändern. Eine weitere Sämaschine, welche eine mit einer derartigen Zellenradwalze bestückte Dosiereinrichtung aufweist, ist z.B. aus der DE 195 22 229 C2 bekannt. Schließlich ist der EP 0 927 511 A1 eine weitere Dosiereinrichtung für gattungsgemäße Verteilmaschinen zu entnehmen, deren Zellenradschleuse mittels einer von der Zellenradschleuse unter Bildung eines Spaltes beabstandeten Dichteinrichtung der vorgenannten Art ausgestattet ist, wobei zur Abdichtung dieses Spaltes an der Dichtfläche der Dichteinrichtung Borsten angebracht sind, welche mit den Spitzen der Zellenradschleuse in Kontakt stehen. Indes eignen sich derartige, für Zellenradschleusen vorgesehene Dichteinrichtungen bauartbedingt nicht zur Abdichtung von Nockenwalzen.

Die JP 2011-188 796 A beschreibt eine für eine Sämaschine vorgesehene Dosiereinheit mit einer drehangetriebenen Dosierwalze. Letztere weist einerseits eine Mehrzahl an Zellenradsegmentscheiben auf, welche jeweils eine Mehrzahl an in Umfangsrichtung hintereinander angeordneten Zellensegmenten besitzen. Andererseits weist die Dosierwalze eine Mehrzahl an in Axialrichtung zwischen den einzelnen Zellenradsegmentscheiben angeordnete Distanzscheiben auf, welche gegen eine erste Seitenwand des Dosiergehäuses abdichten. Die Distanzscheiben selbst besitzen einen gegenüber den Zellenradsegmentscheiben größeren Durchmesser und sind als Vollkörper ohne Dosierfunktion ausgebildet. Die Dosierwalze mit den alternierend angeordneten Zellenradsegmentscheiben und Distanzscheiben ist mittels einer Dichteinrichtung ferner gegen eine zweite Seitenwand des Dosiergehäuses abgedichtet, welche sowohl gegen die Oberfläche der Distanzscheiben als auch gegen die Oberfläche der Zellenradsegmentscheiben dichtend anliegt. Letzteres geschieht durch eine Anpassung der Nutzungsseite der Dichteinrichtung an die verschiedenen Durchmesser der Distanzscheiben und der Zellenradsegmentscheiben, wobei die Nutzungsseite entweder in Form von Borsten von Bürsten oder von elastisch verformbaren Materialien ausgebildet sein kann. Zur Abdichtung einer Nockenwalze mit einer Mehrzahl an in Axialrichtung der Nockenwalze nebeneinander angeordneten Nockenbergen gegen eine Seitenwand des Dosiergehäuses ist die bekannte Dichteinrichtung indes nicht in der Lage, zumal sich auch im Falle der Zellenrad- oder Zellenradsegmentwalzen der Nachteil eines sehr großen Bauraumes aufgrund der Mehrzahl an zwischen den Zellenradsegmentscheiben angeordneten Distanzscheiben ergibt, welche - wie oben erwähnt - keinerlei Dosierfunktion besitzen.

Der Erfindung liegt die Aufgabe zugrunde, eine Dosiereinheit sowie eine hiermit ausgestattete Verteilmaschine der eingangs genannten Art auf einfache und kostengünstige Weise dahingehend weiterzubilden, dass den vorgenannten Nachteilen zumindest weitgehend begegnet werden kann, wobei die Dosiereinheit vorzugsweise sowohl für die Dosierung von Dünger als auch von Saatgut geeignet sein sollte.

Erfindungsgemäß wird diese Aufgabe bei einer Dosiereinheit der eingangs genannten Art dadurch gelöst, dass die Nockenwalze einlassseitig mittels einer Dichteinrichtung gegen eine Seitenwand des Dosiergehäuses abgedichtet ist, wobei sich die Dichteinrichtung in Axialrichtung der Nockenwalze erstreckt und eine Mehrzahl an Dichtungselementen aufweist, welche sich einerseits zumindest bis zu dem freien Ende der Nockenberge der Nockenwalze, andererseits zumindest bis zum Grund der zwischen in Axialrichtung benachbarter Nockenberge der Nockenwalze angeordneten Zwischenräume erstrecken.

Bei einer Verteilmaschine der eingangs genannten Art sieht die Erfindung zur Lösung dieser Aufgabe überdies vor, dass sie mit wenigstens einer Dosiereinheit des vorgenannten Typs ausgestattet ist.

Die erfindungsgemäße Ausgestaltung der Dichtungselemente der Dosiereinheit sorgt für eine wirksame Abdichtung der Nockenwalze gegen die sich etwa parallel zur Drehachse der Nockenwalze erstreckende Seitenwand des Dosiergehäuses, um zu verhindern, dass Streugutpartikel sowohl entgegen der Drehrichtung der Nockenwalze über deren Oberseite hinweg durch die zwischen den Nockenbergen angeordneten Nockentäler als auch durch die axialen Zwischenräume zwischen axial benachbarten Nockenbergen und -tälern, wie sie insbesondere im Falle von aus mehreren Nockenrädern oder -scheiben gebildeten Nockenwalzen vorhanden sind, hindurch rieseln und in den Auslass gelangen können, was zu einer Falschdosierung führte. Dabei macht es die erfindungsgemäße Ausgestaltung, wie weiter unten noch näher erläutert, insbesondere möglich, für eine weitestgehend symmetrische Anordnung der Nockenwalze in dem Dosiergehäuse und eine damit verbundene Anordnung des Einlasses (auch) oberhalb der Nockenwalze zu sorgen, so dass die Dosiereinheit vor mechanischen Einwirkungen geschützt unterhalb des Auslaufes des Vorratsbehälters der Verteilmaschine angeordnet werden kann.

Gemäß einer ersten vorteilhaften Ausführungsvariante der Dichteinrichtung kann vorgesehen sein, dass die Dichtungselemente der Dichteinrichtung von gegen die Nockenwalze anliegenden, elastischen Dichtungsfingern, insbesondere aus wenigstens einem elastisch nachgiebigen Kunststoffmaterial, gebildet sind, deren Länge derart bemessen ist, dass sie sich sowohl zumindest bis zum Grund der zwischen in Axialrichtung benachbarter Nockenberge der Nockenwalze angeordneten Zwischenräume als auch zumindest bis in den Grund der Nockentäler zwischen den in Umfangsrichtung der Nockenwalze hintereinander angeordneten Nockenbergen erstrecken. Die Länge derartiger Dichtungsfinger ist im Hinblick auf eine besonders wirksame Abdichtung des Zwischenraumes zwischen der Nockenwalze und der dieser benachbarten Seitenwand folglich derart bemessen, dass sich die Dichtungsfinger einerseits zumindest bis in den Grund der Nockentäler zwischen den in Umfangsrichtung der Nockenwalze hintereinander angeordneten Nockenbergen, andererseits bis zum Grund der zwischen in Axialrichtung benachbarter Nockenberge und -täler angeordneten Zwischenräume der Nockenwalze erstrecken. Vorzugsweise kann die Länge der Dichtungsfinger hierbei so bemessen sein, dass sie unter zumindest geringem elastischen Andruck den Nockentälern bzw. den genannten Zwischenräumen der Nockenwalze anliegen. Sofern sich diese Zwischenräume zwischen einer Mehrzahl an in Axialrichtung nebeneinander angeordneten Nockenrädern oder -scheiben der Nockenwalze, gegebenenfalls bis zur Mantelfläche einer die einzelnen Nockenscheiben oder -räder tragenden Welle, erstrecken, ist es hinsichtlich einer optimalen Dichtfunktion selbstverständlich zweckmäßig, wenn die Dichtungsfinger derart bemessen sind, dass sie sich bis in den Grund solcher Zwischenräume in Form etwaiger Stoß- oder Umfangsfugen erstrecken und auch dem Grund dieser Zwischenräume vorzugsweise unter zumindest geringem elastischen Andruck anliegen. Die Dichtungsfinger müssen je nach Geometrie der in Umfangsrichtung der Nockenwalze hintereinander angeordneten Nockenberge und Nockentäler der Nockenwalze bzw. der Zwischenräume zwischen den in Axialrichtung nebeneinander angeordneten Nockenbergen und -tälern nicht notwendigerweise eine identische Länge über die gesamte axiale Länge der Dichteinrichtung aufweisen, sondern ist es beispielsweise - sofern die Nockentäler und die Zwischenräume eine unterschiedliche Tiefe besitzen - auch möglich, dass einzelne Dichtungsfinger oder Gruppen von Dichtungsfingern eine unterschiedliche Länge besitzen. Die Dichtungsfinger können im Übrigen vorteilhafterweise aus wenigstens einem elastisch nachgiebigen Kunststoffmaterial gefertigt sein, wobei rein exemplarisch Polyvinylchlorid (PVC) erwähnt sei. Die Dichtungsfinger können ferner in Bündeln gruppiert und/oder in einer oder vorzugsweise mehreren, sich über die axiale Läge der Nockenwalze hinweg erstreckenden Reihen angeordnet sein.

In vorteilhafter Ausgestaltung kann bei einer solchen Dichteinrichtung vorgesehen sein, dass die Dichtungsfinger unter einem endlichen Winkel in Bezug auf die Radialrichtung der Nockenwalze in Drehrichtung der Nockenwalze geneigt angeordnet sind, wobei der Neigungswinkel insbesonde-' re zwischen 0° und 60°, vorzugsweise zwischen 10° und 50°, insbesondere zwischen 20° und 40°, beträgt (d.h. in Bezug auf eine gedachte Tangente der Nockenwalze erstrecken sich die Dichtungsfinger vorteilhafterweise in Drehrichtung der Nockenwalze unter einem Winkel zwischen 30° und 90°, vorzugsweise zwischen 40° und 80°, insbesondere zwischen 50° und 70°). Durch eine solche, in Bezug auf den Radius der Nockenwalze in Drehrichtung geneigte Anordnung der Dichtungsfinger kann dafür Sorge getragen werden, dass letztere durch das Gewicht des dem Dosiergehäuse aufgegebenen Streugutes zusätzlich an die Nockenwalze angedrückt werden, was zu einer noch zuverlässigeren Dichtigkeit führen kann.

Stattdessen kann gemäß einer zweiten vorteilhaften Ausführungsvariante der Dichteinrichtung vorgesehen sein, dass sich die Dichtungselemente der Dichteinrichtung entlang einem Umfangsabschnitt der Nockenwalze erstrecken, welcher zumindest dem Umfangsabstand zweier in Umfangsrichtung benachbarter Nockenberge der Nockenwalze entspricht oder diesen insbesondere übertrifft, wobei die Dichtungselemente einerseits in die in Axialrichtung benachbarter Nockenberge der Nockenwalze angeordneten Zwischenräume eingreifende Dichtungsvorsprünge, andererseits gegen das freie Ende der Nockenberge der Nockenwalze wirkende Dichtungsflächen aufweisen. Auch eine mit solchen Dichtungselementen ausgestattete Dichteinrichtung vermag die Nockenwalze in wirksamer Weise abzudichten, indem sie verhindert, dass das Streugut einerseits in Umfangsrichtung über die Nockenberge hinweg, andererseits durch die Zwischenräume zwischen in Axialrichtung nebeneinander angeordneten Nockenbergen bzw. -tälern hindurch gelangt.

Bei einer solchen Dichteinrichtung kann im Hinblick auf eine vollständige und zuverlässige Abdichtung der Nockenwalze vorzugsweise vorgesehen sein, dass
- die Dichtungsvorsprünge der Dichteinrichtung an ihren freien, den axialen Zwischenräumen zwischen den Nockenbergen der Nockenwalze zugewandten Enden eine zum Grund der Zwischenräume komplementäre Form besitzen, insbesondere kreisbogenförmig ausgestaltet sind; und/oder
- die Dichtungsflächen der Dichteinrichtung an ihren freien, den freien Enden der Nockenberge der Nockenwalze zugewandten Enden eine zum Außenumfang der Nockenberge komplementäre Form besitzen, insbesondere kreisbogenförmig ausgestaltet sind.

Die komplementären Formen der Dichtungsvorsprünge bzw. der Dichtungsflächen der Dichtungselemente der Dichteinrichtung kann dabei mit dem Grund der Zwischenräume bzw. mit den freien Ende der rotierenden Nockenwalze in Berührung stehen, wobei sie in diesem Fall zweckmäßigerweise aus einem reibungsarmen Material gefertigt oder mit einem solchen beschichtet sind, oder es kann zwischen den komplementären Formen der Dichtungsvorsprünge bzw. der Dichtungsflächen der Dichtungselemente und dem Grund der Zwischenräume bzw. den freien Ende der rotierenden Nockenwalze ein geringer Spalt gebildet sein, welcher insbesondere kleiner als die Korngröße des verwendeten Streugutes gewählt sein kann.

Darüber hinaus ist es aus den genannten Gründen von Vorteil, wenn
- die sich in Axialrichtung der Nockenwalze erstreckende Breite der Dichtungsvorsprünge der Dichteinrichtung komplementär zur Breite der axialen Zwischenräume zwischen den Nockenbergen der Nockenwalze ist (d.h. die Breite der Dichtungsvorsprünge entspricht weitestgehend der Breite der Zwischenräume und kann im Falle sich verjüngender oder verbreiternder Zwischenräume insbesondere hieran anangepasst sein und/oder
- die sich in Axialrichtung der Nockenwalze erstreckende Breite der Dichtungsflächen der Dichteinrichtung komplementär zur Breite der Nockenberge ist (d.h. die Breite der Dichtungsflächen entspricht weitestgehend der Breite der Nockenberge).

Sowohl bei der ersten als auch bei der zweiten Ausführungsvariante kann die Dichteinrichtung in bevorzugter Ausgestaltung in einem Umfangsbereich der Nockenwalze angeordnet sein, welcher - in Drehrichtung der Nockenwalze betrachtet - dem oberen Punkt der Nockenwalze vorgeordnet ist, d.h. die Dichteinrichtung ist vorzugsweise an einem Umfangsbereich der Nockenwalze positioniert, welcher in Bezug auf eine vertikale, die Drehachse der Nockenwalze einschließende Ebene auf der derjenigen Seitenwand, gegen welche die Dichteinrichtung die Nockenwalze abdichtet, zugewandten Seite einer solchen Ebene angeordnet ist. Dabei kann insbesondere vorgesehen sein, dass die Dichteinrichtung in einem Umfangsbereich der Nockenwalze angeordnet ist, welcher zwischen dem oberen Punkt der Nockenwalze und dem der Seitenwand des Dosiergehäuses, gegen welche die Dichteinrichtung die Nockenwalze abdichtet, nächstliegenden Punkt der Nockenwalze angeordnet ist. Mit anderen Worten ist die Dichteinrichtung vorzugsweise an einem Umfangsbereich der Nockenwalze positioniert, welcher einerseits in Bezug auf eine vertikale, die Drehachse der Nockenwalze einschließende Ebene auf der derjenigen Seitenwand, gegen welche die Dichteinrichtung die Nockenwalze abdichtet, zugewandten Seite einer solchen Ebene angeordnet ist, und welcher andererseits oberhalb einer horizontalen, die Drehachse der Nockenwalze einschließenden Ebene angeordnet ist.

Gemäß einer vorteilhaften Weiterbildung kann vorgesehen sein, dass der Dichteinrichtung eine Reinigungseinrichtung zugeordnet ist, welche insbesondere - in Drehrichtung der Nockenwalze betrachtet - der Dichteinrichtung vorgeordnet ist, also - wiederum in Drehrichtung der Nockenwalze betrachtet - stromauf der Dichteinrichtung angeordnet sein kann, so dass die Nockenberge und -täler der Nockenwalze beim Drehen derselben zuerst die Reinigungseinrichtung und sodann die Dichteinrichtung passieren. Die Reinigungseinrichtung dient zum Entfernen von gegebenenfalls auf der Oberfläche der Nockenwalze anbackenden Streugutpartikeln oder Streugutpartikelaggregationen, welche mittels der Reinigungseinrichtung mechanisch gelöst werden.

Die Reinigungseinrichtung kann zweckmäßig
- eine Mehrzahl an gegen die Nockenwalze anliegende, elastische Reinigungsfinger aufweisen, welche sich zumindest bis in den Grund der Nockentäler zwischen den in Umfangsrichtung der Nockenwalze hintereinander angeordneten Nockenbergen erstrecken; und/oder
- eine Mehrzahl an in die Zwischenräume zwischen in Axialrichtung nebeneinander angeordnete Nockenberge der

Nockenwalze eingreifende Reinigungsstifte aufweisen, wobei die Reinigungsfinger und/oder die Reinigungsstifte insbesondere eine gegenüber den Dichtungsfingern der Dichteinrichtung höhere Steifigkeit besitzen können. Auf diese Weise werden in den Nockentälern bzw. in den Zwischenräumen gegebenenfalls anhaftende Streugutpartikel "herausgekratzt" und wird die Nockenwalze folglich während des Betriebs stets von derartigen Anbackungen befreit. Sofern die Nockenwalze eine Mehrzahl an in Axialrichtung nebeneinander angeordnete Nockenräder oder -scheiben umfasst, welche die Nockenwalze bilden, ist es hinsichtlich einer optimalen Reinigungsfunktion gleichfalls zweckmäßig, wenn die Reinigungsstifte auch in etwaige Stoß- oder Umfangsfugen, welche zwischen den einzelnen Nockenrädern oder -scheiben gebildet sein können, eingreifen. Die Reinigungsfinger und/oder die Reinigungsstifte können sich dabei vorzugsweise im Wesentlichen in Radialrichtung der Nockenwalze erstrecken oder unter einem endlichen Winkel von höchstens 20°, insbesondere von höchstens 10°, in Bezug auf die Radialrichtung der Nockenwalze in Drehrichtung der Nockenwalze geneigt angeordnet sein (d.h. in Bezug auf eine gedachte Tangente der Nockenwalze erstrecken sich die Reinigungsfinger und/oder -stifte vorteilhafterweise unter einem Winkel von im Wesentlichen 90° oder sind in Bezug auf eine solche Tangente der Nockenwalze unter einem Winkel von mindestens 70°, vorzugsweise von mindestens 80°, in Drehrichtung geneigt angeordnet).

Wie bereits angedeutet, sieht eine besonders vorteilhafte Ausgestaltung der erfindungsgemäßen Dosiereinheit vor, dass zumindest ein Abschnitt der vertikalen Projektion der Fläche des Auslasses, insbesondere die gesamte vertikale Projektion der Fläche des Auslasses, des Dosiergehäuses mit der vertikalen Projektion der Fläche des Einlasses des Dosiergehäuses überlappt, so dass der Auslass zumindest größtenteils vertikal unterhalb des Einlasses angeordnet ist. Dies gibt die Möglichkeit, die Dosiereinheit weitestgehend ohne seitlichen Versatz unterhalb des Vorratsbehälters der Verteilmaschine zu positionieren.

Die Dichteinrichtung und gegebenenfalls auch die Reinigungseinrichtung ist bzw. sind mit Vorzug an der Seitenwand des Dosiergehäuses, gegen welche die Dichteinrichtung die Nockenwalze abdichtet, festgelegt.

Darüber hinaus ist die Nockenwalze mit Vorzug herausnehmbar in dem Dosiergehäuse gelagert, was die Möglichkeit gibt, die aus den eingangs genannten Gründen vornehmlich für partikelförmigen Dünger geeignete Nockenwalze gegen andersartige, beispielsweise vornehmlich für Saatgut geeignete Dosierwalzen, z.B. in Form von Zellenradwalzen oder dergleichen, auszutauschen. In diesem Zusammenhang sieht eine vorteilhafte Ausgestaltung überdies vor, dass
- die Dichteinrichtung abnehmbar an der Seitenwand des Dosiergehäuses festgelegt ist, wobei die Dichteinrichtung insbesondere gegen wenigstens eine weitere Dichteinrichtung austauschbar ist, welche zur Abdichtung gegen eine weitere, andersartige Dosierwalze ausgebildet ist; oder
- die die Dichteinrichtung tragende Seitenwand austauschbar an dem Dosiergehäuse festgelegt ist, wobei die Seitenwand insbesondere gegen wenigstens eine weitere Seitenwand mit einer weiteren Dichteinrichtung austauschbar ist, welche zur Abdichtung gegen eine weitere, andersartige Dosierwalze ausgebildet ist.

Dies gibt nicht nur die Möglichkeit, die Nockenwalze gegen andersartige, beispielsweise vornehmlich für Saatgut geeignete Dosierwalzen auszutauschen, sondern es kann auch die erfindungsgemäße, an die Abdichtung der Nockenwalze angepasste Dichteinrichtung gegen eine andere, für die jeweilige Dosierwalze geeignete weitere Dichteinrichtung ausgetauscht werden, um der Dosiereinheit die Anwendung zur Verteilung von verschiedensten Arten von Streu- und Saatgut zu erschließen.

Bei der weiteren Dichteinrichtung kann es sich beispielsweise um einen gegen einen Umfangsabschnitt der weiteren Dosierwalze anliegenden oder in Richtung des Umfangs der weiteren Dosierwalze anliegenden oder in Richtung des Umfangs der weiteren Dosierwalze vorstehenden und von dieser durch einen Spalt beabstandeten Dichtungsblock handeln, welcher sich um einen Umfangsabschnitt der weiteren Dosierwalze erstreckt und dessen der weiteren Dosierwalze zugewandte Dichtfläche insbesondere komplementär zum Außenumfang der weiteren Dosierwalze ist. Bei der weiteren Dosierwalze kann es sich insbesondere um wenigstens eine Dosierwalze aus der Gruppe Zellenradwalze, Zellenradsegmentwalze, Lochwalze und Nutenwalze handelt. Die weitere(n) Dichteinrichtung(en) sind in jedem Fall an die Struktur der weitere(n) Dosierwalzen angepasst, wobei es selbstverständlich auch möglich ist, für solche weiteren Dosierwalzen geeignete weitere Reinigungseinrichtungen vorzusehen, welche gleichfalls gegen die Reinigungseinrichtung der Nockenwalze ausgetauscht werden können, indem sie ihrerseits abnehmbar an der Seitenwand des Dosiergehäuses oder an der jeweiligen abnehmbaren Seitenwand des Dosiergehäuses festgelegt sind. Als Beispiel derartiger Reinigungseinrichtungen seien Bürsten erwähnt, welche in die Zellensegmente von Zellenradsegmentwalzen oder in die Löcher oder Nuten von Loch- oder Nutenwalzen eingreifen und der jeweiligen weiteren Dichteinrichtung insbesondere gleichfalls in Drehrichtung der Dosierwalze vorgeordnet, also stromauf der weiteren Dichteinrichtung angeordnet, sein können.

Um bei einem konstruktiv einfachen Aufbau der Dosiereinheit für einen einfachen, schnellen und bequemen Austausch der Nockenwalze gegen andere Dosierwalzen, wie z.B. solche der im vorherigen Absatz erwähnten Art, zu sorgen, kann die Nockenwalze beispielsweise an zwei entgegengesetzten Seitenwänden des Dosiergehäuses gelagert sein, wobei die einem Antrieb der Nockenwalze abgewandte Lagerung und/oder die einem Antrieb der Nockenwalze zugewandte Lagerung der Nockenwalze abnehmbar und insbesondere gegen eine weitere Lagerung einer weiteren Dosierwalze austauschbar ist. Die Lagerung(en) kann/können dabei vorzugsweise mittels manuell betätigbarer Schnellverschlüsse, z.B. mittels eines Bajonettverschlusses, an dem Dosiergehäuse befestigbar sein.

Die der Seitenwand des Dosiergehäuses, gegen welche die Dichteinrichtung die Nockenwalze abdichtet, entgegengesetzte Seitenwand des Dosiergehäuses kann in als solcher bekannter Weise eine Dosierwanne umfassen, welche sich von dieser Seitenwand bis auf ein Höhenniveau unterhalb der Nockenwalze erstreckt und dabei den Zwischenraum zwischen dieser Seitenwand und der Nockenwalze in Drehrichtung der Nockenwalze, insbesondere stetig, verschmälert, so dass sich der Zwischenraum zwischen dieser Seitenwand und der Nockenwalze von oben nach unten bzw. vom Einlass zum Auslass verjüngt. Dabei kann insbesondere vorgesehen sein, dass
- die Dosierwanne austauschbar an der Seitenwand des Dosiergehäuses und/oder
- die die Dosierwanne tragende Seitenwand austauschbar an dem Dosiergehäuse
festgelegt ist, so dass auch ein einfacher Austausch der Dosierwanne möglich ist, sofern diese an eine andere Dosierwalze bzw. an anderes Streu- oder Saatgut angepasst werden soll.

In weiterhin vorteilhafter Ausgestaltung kann vorgesehen sein, dass die Nockenwalze auslassseitig mit einer sich in Axialrichtung der Nockenwalze erstreckenden Dichtlippe in Kontakt steht, welche insbesondere
- austauschbar an einer Seitenwand des Dosiergehäuses, welche entgegengesetzt zu der die Dichteinrichtung tragenden Seitenwand angeordnet ist, und/oder
- an einer austauschbaren Seitenwand des Dosiergehäuses, welche entgegengesetzt zu der die Dichteinrichtung tragenden Seitenwand angeordnet ist,
festgelegt ist, um die Dichtlippe separat oder mitsamt der sie tragenden Seitenwand demontieren und gegen eine andere, für eine andersartige Dosierwalze, wie eine solche der weiter oben genannten Art, geeignete Dichtlippe austauschen zu können. Die Dichtlippe liegt folglich den Nockenbergen der Nockenwalze an, so dass nur das in den Nockentälern und/oder in den Zwischenräumen zwischen axial benachbarten Nockenbergen bzw. -tälern der Nockenwalze angereicherte Streugut vom Innern des Dosiergehäuses in dessen Auslass zu gelangen vermag und eine hohe Dosiergenauigkeit erzielt wird. Die Dichtlippe kann beispielsweise aus einem elastisch nachgiebigen Material, insbesondere aus einem Kunststoffmaterial, gefertigt sein. Hinsichtlich der Positionierung der Dichtlippe kann vorzugsweise vorgesehen sein, dass sie in einem Umfangsbereich der Nockenwalze angeordnet, welcher - in Drehrichtung der Nockenwalze betrachtet - dem tiefsten Punkt der Nockenwalze vorgeordnet bzw. - wiederum in Drehrichtung der Nockenwalze betrachtet - stromauf des tiefsten Punktes der Nockenwalze angeordnet ist. Mit anderen Worten ist die auslassseitige Dichtlippe vorzugsweise an einem Umfangsbereich der Nockenwalze positioniert, welcher in Bezug auf eine vertikale, die Drehachse der Nockenwalze einschließende Ebene auf der derjenigen Seitenwand, gegen welche die Dichteinrichtung die Nockenwalze abdichtet, abgewandten Seite einer solchen Ebene angeordnet ist. Die Dichtlippe kann dabei insbesondere in einem Umfangsbereich der Nockenwalze angeordnet sein, welcher zwischen dem tiefsten Punkt der Nockenwalze und dem der die Dichtlippe tragenden Seitenwand des Dosiergehäuses (d.h. der die Dichteinrichtung tragenden Seitenwand entgegengesetzten Seitenwand) nächstliegenden Punkt der Nockenwalze angeordnet ist. Mit anderen Worten ist die auslassseitige Dichtlippe demnach vorzugsweise an einem Umfangsbereich der Nockenwalze positioniert, welcher einerseits in Bezug auf eine vertikale, die Drehachse der Nockenwalze einschließende Ebene auf der derjenigen Seitenwand, gegen welche die Dichteinrichtung die Nockenwalze abdichtet, abgewandten Seite einer solchen Ebene angeordnet ist, und welcher andererseits unterhalb einer horizontalen, die Drehachse der Nockenwalze einschließenden Ebene angeordnet ist. Die Dichtlippe kann mit ihrem freien Ende insbesondere im Bereich der tiefstgelegenen Punktes der Nockenwalze - oder genauer: etwa entlang der tiefstgelegenen Linie vertikal unterhalb der Drehachse der Nockenwalze - gegen die Nockenberge der Nockenwalze anliegen.

Im Übrigen kann es sich, wie eingangs angedeutet, bei der mit einer Dosiereinheit der vorgenannten Art versehenen Verteilmaschine insbesondere um eine pneumatische Streuund/oder Sämaschine handeln, welche wenigstens ein Gebläse umfasst, um das mittels der wenigstens einen Dosiereinheit dosierte Streu- oder Saatgut in einem Luftstrom dem wenigstens einen Verteilorgan zuzuführen.

Weitere Merkmale und Vorteile der Erfindung ergeben sich aus der nachfolgenden Beschreibung unter Bezugnahme auf die Zeichnungen. Dabei zeigen:
- Fig. 1: eine schematische Seitenansicht einer Ausführungsform einer pneumatischen Verteilmaschine in Fahrtrichtung betrachtet;
- Fig. 2: einen schematischen Vertikalschnitt durch eine erste Ausführungsform einer Dosiereinheit der Verteilmaschine gemäß Fig. 1;
- Fig. 3: eine schematische perspektivische Ansicht der Dosiereinheit gemäß Fig. 2;
- Fig. 4: eine der Fig. 3 entsprechende perspektivische Ansicht der Dosiereinheit gemäß Fig. 2 und 3 in geschnittener Darstellung;
- Fig. 5: eine schematische perspektivische Ansicht einer zweiten Ausführungsform einer Dosiereinheit der Verteilmaschine gemäß Fig. 1 ohne den Drehantrieb und dessen Abtriebswelle mit demontierter Dichteinrichtung;
- Fig. 6: eine schematische perspektivische Ansicht der Dosiereinheit gemäß Fig. 5 von schräg oben betrachtet;
- Fig. 7: eine schematische Draufsicht auf die Dosiereinheit gemäß Fig. 5 und 6 von oben;
- Fig. 8: eine schematische Schnittansicht der Dosiereinheit gemäß Fig. 8 entlang der Schnittebene VIII-VIII auf dem Niveau eines axialen Zwischenraumes zwischen axial benachbarten Nockenbergen bzw. -tälern der Nockenwalze;
- Fig. 9: eine schematische Schnittansicht der Dosiereinheit gemäß Fig. 8 entlang der Schnittebene IX-IX auf dem Niveau eines Nockenberges der Nockenwalze;
- Fig. 10: einen schematischen Vertikalschnitt durch die Dosiereinheit gemäß Fig. 2 bis 4 oder gemäß Fig. 3 bis 9, bei welcher die Nockenwalze und die Dichteinrichtung gegen eine andersartige Dosierwalze in Form einer Zellenradwalze und gegen eine andersartige Dichteinrichtung ausgetauscht worden sind;
- Fig. 11: eine schematische perspektivische Ansicht der Dosiereinheit gemäß Fig. 10 in geschnittener Darstellung;
- Fig. 12a: eine perspektivische Detailansicht der Seitenwand der Dosiereinheit mit einer Dichteinrichtung und einer Reinigungseinrichtung gemäß Fig. 2 bis 4;
- Fig. 12b: eine perspektivische Detailansicht der Nockenwalze der Dosiereinheit gemäß Fig. 2 bis 4;
- Fig. 13a: eine perspektivische Detailansicht der Seitenwand der Dosiereinheit mit einer Dichteinrichtung und einer Reinigungseinrichtung gemäß Fig. 5 bis 9;
- Fig. 13b: eine perspektivische Detailansicht der Nockenwalze der Dosiereinheit gemäß Fig. 5 bis 9;
- Fig. 14a: eine perspektivische Detailansicht der Seitenwand der Dosiereinheit mit der andersartigen Dichteinrichtung gemäß Fig. 10 und 11;
- Fig. 14b: eine perspektivische Detailansicht der als Zellenradwalze ausgestalteten Dosierwalze der Dosiereinheit gemäß Fig. 10 und 11;
- Fig. 15a: eine perspektivische Detailansicht einer Seitenwand der Dosiereinheit mit einer weiteren Ausführungsform einer Dichteinrichtung sowie einer Reinigungseinrichtung; und
- Fig. 15b: eine perspektivische Detailansicht einer weiteren Ausführungsform einer Dosierwalze in Form einer Lochwalze, welche mit der Dichteinrichtung und der Reinigungseinrichtung der Seitenwand gemäß Fig. 15a zusammenwirkt.

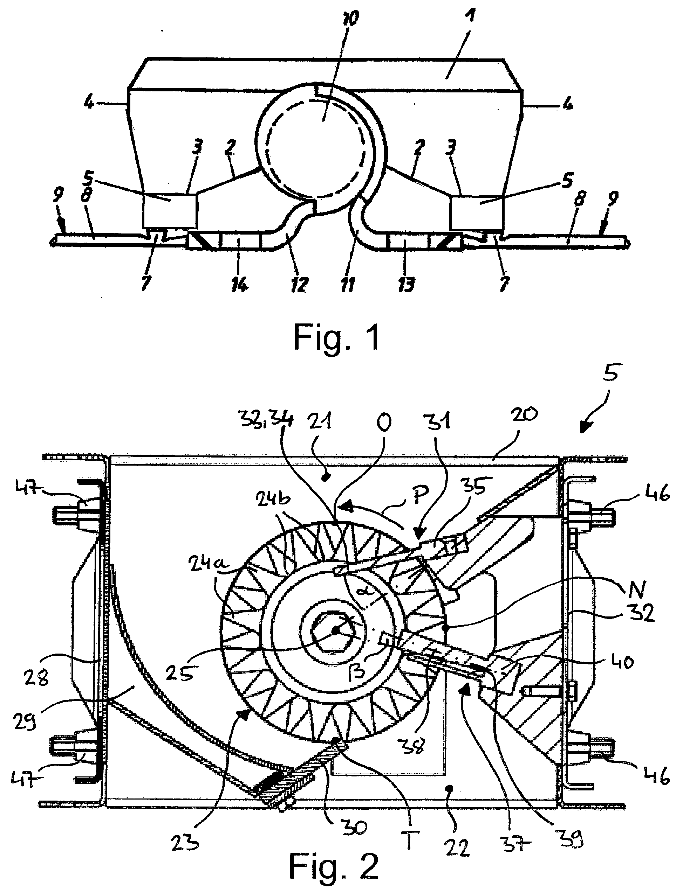

Die in Fig. 1 schematisch wiedergegebene Verteilmaschine in Form einer pneumatischen Streu- und/oder Sämaschine weist einen Vorratsbehälter 1 mit zwei Behälterteilen auf, welche je einen sich konisch nach unten verjüngenden Boden 2 besitzen, welcher zu je eine Auslauföffnung 3 abfällt. Die seitlichen Begrenzungen des Vorratsbehälters 1 sind von seitlichen Wandungen 4 gebildet, welche sich gleichfalls in Richtung der jeweiligen Auslauföffnung 3 nach unten verjüngen. An die Auslauföffnungen 3 schließt sich nach unten je eine Dosiereinheit 5 an, wie sie weiter unten unter Bezugnahme auf die Fig. 2 ff im Einzelnen erläutert ist. Unterhalb der Dosiereinheiten 5 angeordnete Auffangschalen 7 münden in einen Abschnitt 8 je einer Förderleitung 9, welche in entgegengesetzte Richtungen nach außen führen. Die pneumatische Verteilmaschine umfasst ferner ein Gebläse 10, welches beispielsweise in zentralen Bereich der ihrer Längsachse positioniert ist. Aus je einem Druckstutzen 11, 12 des Gebläses 10 führt je ein Luftverteiler 13, 14 zu den Abschnitten 8 der Förderleitungen 9, um das dort zudosierte Streu- oder Saatgut aufzunehmen. Während in der schematischen Darstellung der Fig. 1 nur je eine Förderleitung 9 gezeigt ist, sei darauf hingewiesen, dass im Bereich des Übergangs zwischen den Luftverteilern 13, 14 zu den Förderleitungen 9 insbesondere Injektoren (nicht gezeigt) angeordnet sein können, mittels welcher der aus den Druckstutzen 11, 12 zugeführte Gasstrom in eine Mehrzahl an Förderleitungen (nicht gezeigt), wie je ein Bündel von Förderleitungen, überführt wird, welche das Streu- oder Saatgut schließlich pneumatisch bis zu an deren Ende angeordnete Verteilorgane (ebenfalls nicht gezeigt) überführen, welche z.B. von Prallplatten gebildet sind und auf welche das Streu- oder Saatgut auftrifft, um von dort im Wesentlichen fächerförmig auf dem Boden abgelegt werden zu können. Die Verteilorgane können an sich beidseits quer zur Fahrtrichtung (in Fig. 1 nach rechts und links) erstreckenden Auslegern (nicht gezeigt) angeordnet sein, wobei die Verteilorgane mit unterschiedlichen seitlichen Abständen von dem Vorratsbehälter 1 angeordnet sind und jedem Verteilorgan je eine Förderleitung eines Bündels von Förderleitungen zugeordnet ist.

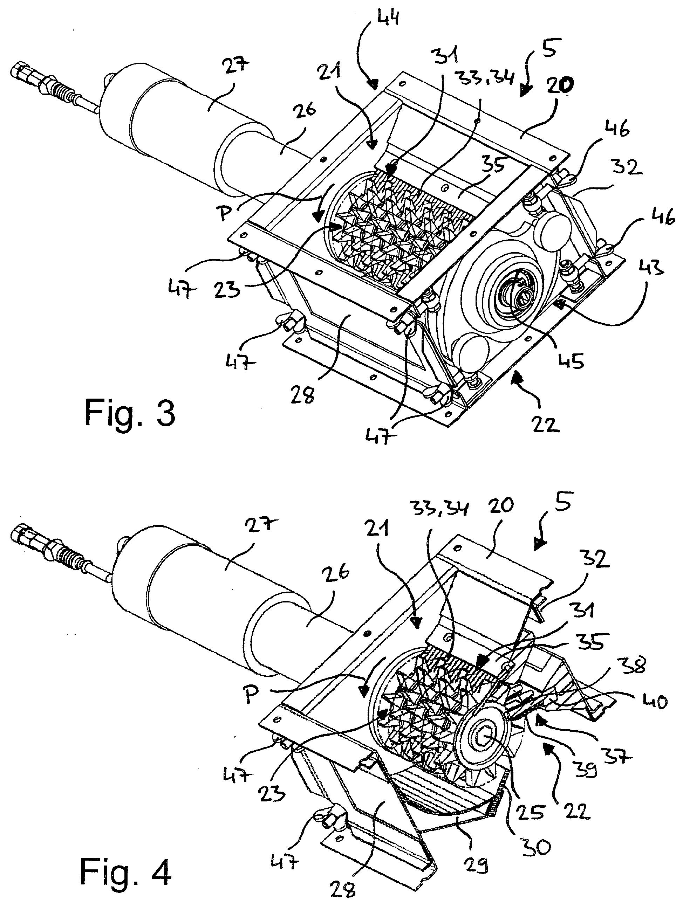

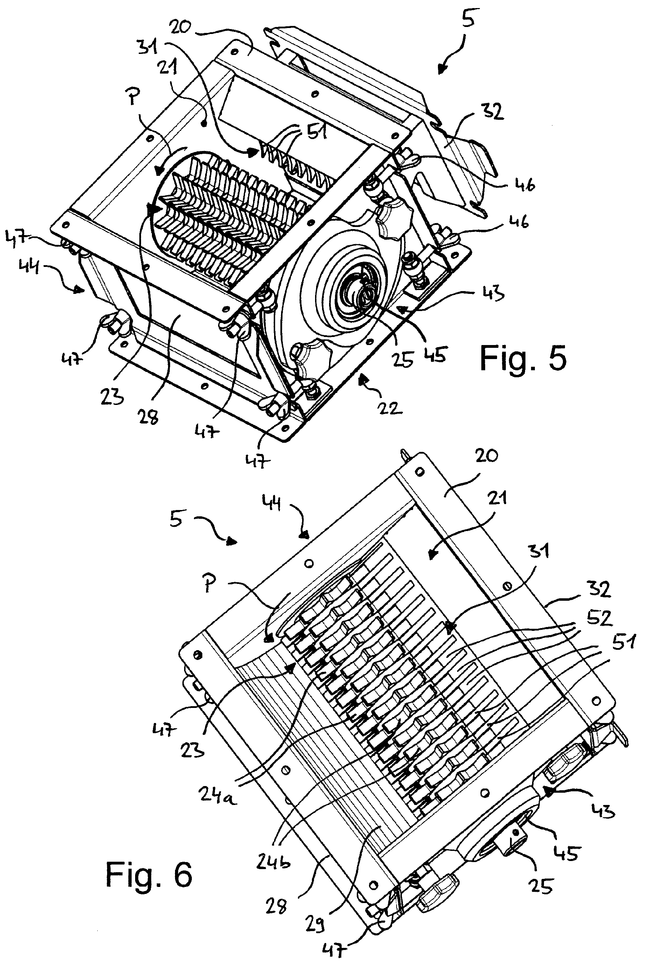

In Fig. 2 bis 4 ist ein erstes Ausführungsbeispiel einer Dosiereinheit 5 der Verteilmaschine gemäß Fig. 1 dargestellt. Die Dosiereinheit 5 umfasst ein Dosiergehäuse 20, welches z.B. im Wesentlichen kasten- bzw. quaderförmig ausgestaltet ist und einen an dessen Oberseite angeordneten Einlass 21 sowie einen an dessen Unterseite angeordneten Auslass 22 aufweist. In dem zentralen Bereich des Dosiergehäuses 20 ist eine Dosierwalze in Form einer Nockenwalze 23 gelagert, welche sich vornehmlich zum Ausbringen von Streugut, wie beispielsweise Mineraldünger, eignet. Die Nockenwalze 23 ist beim vorliegenden Ausführungsbeispiel aus einer Mehrzahl an in Axialrichtung nebeneinander angeordneten Nockenrädern oder -scheiben gebildet (vgl. insbesondere Fig. 3 und 4), welche jeweils mit in Umfangsrichtung alternierend angeordneten Nockenbergen 24a und Nockentälern 24b (Fig. 2) versehen und drehfest auf einer zentralen Welle 25 montiert sind. Die Nockenberge 24a und Nockentäler 24b benachbarter Nockenräder oder -scheiben sind mit axialem Versatz zueinander angeordnet, so dass - in Axialrichtung der Nockenwalze 23 betrachtet - Nockenberge 24a und Nockentäler 24b abwechseln. Indes können die Nockenberge 24a und -täler 24b je nach Wunsch selbstverständlich auch axial fluchtend angeordnet sein (vgl. hierzu z.B. Fig. 5 bis 9). In Axialrichtung zwischen den Nockenbergen 24a und -tälern 24b der Mehrzahl an Nockenrädern oder -scheiben sind Zwischenräume vorhanden. Wie in Fig. 3 und 4 erkennbar, ist die Nockenwalze 23 von der Abtriebswelle 26 eines steuerbaren Drehantriebs 27 rotationsangetrieben, um sie mit der gewünschten Geschwindigkeit in Richtung des Pfeils P drehen zu können.

An der in Fig. 2 bis 4 linken, parallel zur Drehachse 25 der Nockenwalze 23 angeordneten Seitenwand 28 des Dosiergehäuses 20 ist innenseitig eine Dosierwanne 29 befestigt, welche sich von der Seitenwand 28 bis auf ein Höhenniveau unterhalb der Nockenwalze 23 erstreckt und dabei den Zwischenraum zwischen der Seitenwand 28 und der Nockenwalze 23 stetig verschmälert. Die Dosierwanne 29 dient zum Zuführen des über den Einlass 21 von oben in das Dosiergehäuse 20 eingebrachten Streugutes an den Auslass 22 und weist an ihrem der Nockenwalze 23 zugewandten Ende eine in Richtung der Nockenwalze 23 - hier: schräg nach oben - vorstehende und mit den Nockenbergen 24a derselben in Kontakt stehende, auslassseitige Dichtlippe 30 auf, welche sich über die gesamte axiale Länge der Nockenwalze 23 erstreckt. Die Dichtlippe 30, welche insbesondere auch einem elastisch nachgiebigen Kunststoffmaterial gefertigt ist, liegt an einem Umfangsbereich der Nockenwalze 23 an und ist am freien Ende der Dosierwanne 29 festgelegt. Dabei ist die Kontaktlinie der Dichtlippe 30 mit der Nockenwalze 23 - in Drehrichtung P der Nockenwalze 23 betrachtet - dem tiefsten Punkt T der Nockenwalze 23 (also vertikal unterhalb deren Drehachse 25; vgl. Fig. 2) vorgeordnet bzw. stromauf desselben positioniert oder - wie es beim gezeigten Ausführungsbeispiel der Fall ist - fällt etwa mit dem tiefstgelegenen Punkt T der Nockenwalze 23 (oder genauer: deren tiefstgelegenen Mantellinie vertikal unterhalb ihrer Drehachse 25 und parallel zu derselben) zusammen. Die auslassseitige Dichtlippe 30 sorgt dafür, dass bei rotierender Nockenwalze 23 in Richtung des Pfeils P nur dasjenige Streugut in den Auslass 22 überführt werden kann, welches die in Umfangs- bzw. in Axialrichtung zwischen den Nockenbergen 24a angeordneten Nockentäler 24a bzw. Zwischenräume ausfüllt und nicht etwa zusätzliche Mengen an Streugut an den Nockenbergen 24a vorbei (bzw. unter diesen hindurch) in den Auslass 22 ausgetragen werden können, um Falschdosierungen zu verhindern.

Um darüber hinaus zuverlässig zu verhindern, dass Anteile des in dem Dosiergehäuse 20 befindlichen Streugutes insbesondere im Falle von geringen Dosiermengen (die Nockenwalze 23 dreht sich nur sehr langsam) über die Oberseite der Nockenwalze 23 hinweg (also entgegen deren Drehrichtung P) in den Auslass 22 ausgetragen werden können, ist die Dosiereinheit ferner mit einer Dichteinrichtung 31 ausgestattet, welche die Nockenwalze 23 einlassseitig gegen die in Fig. 2 bis 4 rechte Seitenwand 32 abdichtet, welche parallel zur Drehachse 25 der Nockenwalze 23 und entgegengesetzt zu der die Dosierwanne 29 tragenden Seitenwand 28 angeordnet ist. Die Dichteinrichtung 31 erstreckt sich entlang der gesamten axialen Länge der Nockenwalze 23 und ist an einem Umfangsbereich der Nockenwalze 23 angeordnet, welcher zwischen dem oberen Punkt O (siehe Fig. 2) und dem der Seitenwand 32, welche die Dichteinrichtung 31 trägt und gegen welche die Dichteinrichtung 31 somit die Nockenwalze 23 abdichtet, nächstliegenden Punkt N (vgl. ebenfalls Fig. 2) angeordnet ist.

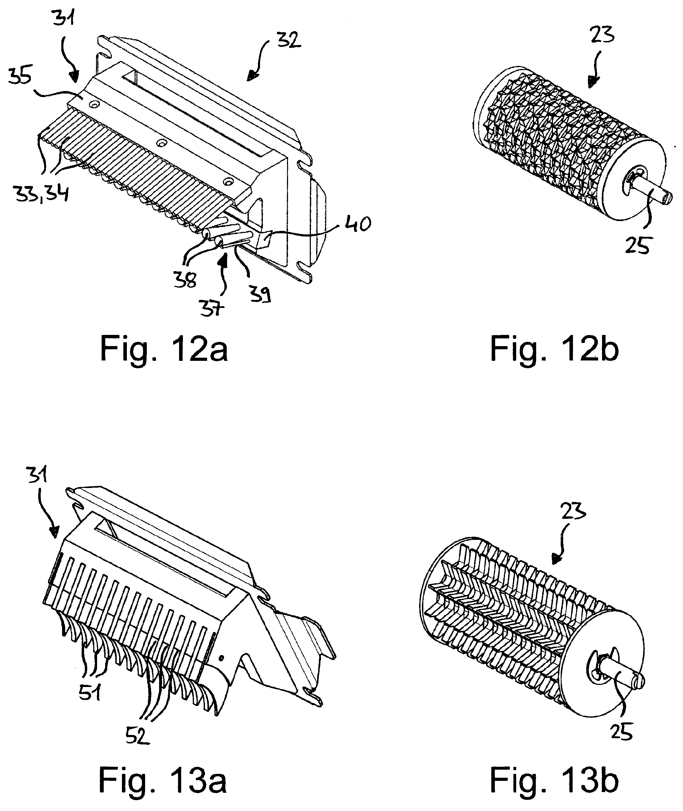

Im Falle der Ausführungsvariante gemäß Fig. 2 bis 4 einschließlich der Detailansichten gemäß Fig. 12a und 12b besitzt die Dichteinrichtung 31 eine Mehrzahl an gegen die Nockenwalze 23 anliegenden Dichtungsfinger 33 aus einem elastisch nachgiebigen Material, z.B. einem Kunststoffmaterial, welche beim vorliegenden Ausführungsbeispiel eine borstenförmige Gestalt aufweisen und in einer oder mehreren Reihe(n) von Bündeln 34 gruppiert sind, welche an einem Träger 35 befestigt sind. Die Länge der Dichtungsfinger 33 der Dichteinrichtung 31 ist derart bemessen, dass sie sich sowohl bis in den Grund der Nockentäler 24b zwischen den in Umfangsrichtung der Nockenwalze 23 hintereinander angeordneten Nockenbergen 24a als auch bis zum Grund der zwischen den in Axialrichtung benachbarter Nockenberge 24a angeordneten Zwischenräume der Nockenwalze 23 erstrecken, um für eine gänzliche Abdichtung des Zwischenraumes zwischen der Nockenwalze 23 und der (in Fig. 2 bis 4 rechten) Seitenwand 32 des Dosiergehäuses 20 zu sorgen. Wie der Fig. 2 zu entnehmen ist, sind die Dichtungsfinger 33 dabei im vorliegenden Fall unter einem Winkel α von etwa 30° in Bezug auf die Radialrichtung der Nockenwalze 23 in Drehrichtung P derselben geneigt angeordnet, so dass sie infolge des Gewichts des von oben auf ihnen aufliegenden Streugutes gegen die Nockenwalze 23 angedrückt werden, um ihre Dichtwirkung zu erhöhen.

In Drehrichtung P der Nockenwalze 23 betrachtet stromauf der Dichteinrichtung 31 - also der Dichteinrichtung 31 vorgeordnet - ist eine Reinigungseinrichtung 37 vorgesehen, deren Zweck darin besteht, etwaige, der Nockenwalze 23 anhaftende Agglomerationen von Streugut mechanisch zu lösen. Die Reinigungseinrichtung 37 weist hierfür beispielsweise einerseits eine Mehrzahl an gegen die Nockenwalze 23 anliegende und gegen diese insbesondere elastisch vorbelastete Reinigungsfinger 38 auf, welche sich bis in den Grund der Nockentäler 24b zwischen den in Umfangsrichtung eines jeden Nockenrades oder einer jeden Nockenscheibe der Nockenwalze 23 hintereinander angeordneten Nockenbergen 24a erstrecken und z.B. aus einem Kunststoffmaterial mit einer gegenüber den Dichtungsfingern 33 der Dichteinrichtung 31 höheren Steifigkeit und/oder mit einem demgegenüber größeren Durchmesser gefertigt sind, um etwaige anbackende Streugutagglomerationen von der Nockenwalze 23 "abkratzen" zu können. Andererseits umfasst die Reinigungseinrichtung 37 eine Mehrzahl an in Axialrichtung der Nockenwalze 23 nebeneinander angeordnete Reinigungsstifte 39, welche zwischen die Nockenberge 24a der einzelnen Nockenräder oder -scheiben der Nockenwalze 23 eingreifen, um auch dort gegebenenfalls anhaftende Streugutreste mechanisch zu entfernen. Die Reinigungsstifte 39 sind beispielsweise ebenfalls aus einem Kunststoffmaterial oder aus Metall, z.B. Edelstahl, gefertigt. Wie insbesondere aus Fig. 2 ersichtlich, erstrecken sich sowohl die Reinigungsfinger 38 als auch die Reinigungsstifte 39 der Reinigungseinrichtung 37 etwa in Radialrichtung der Nockenwalze 23, wobei sie beim vorliegenden Ausführungsbeispiel geringfügig, wie unter einem Winkel β von etwa 5° bis 10°, in Bezug auf die Radialrichtung der Nockenwalze 23 in deren Drehrichtung P geneigt angeordnet sind (vgl. wiederum Fig. 2). Die Reinigungseinrichtung 37 ist im Übrigen an derselben Seitenwand 32 des Dosiergehäuses 20 festgelegt, welche auch die Dichteinrichtung 31 trägt, wobei die Reinigungseinrichtung einen an der Seitenwand 32 des Dosiergehäuses 20 befestigten Träger 40 umfasst, an welchem die Reinigungsfinder 38 und die Reinigungsstifte 39 befestigt sind.

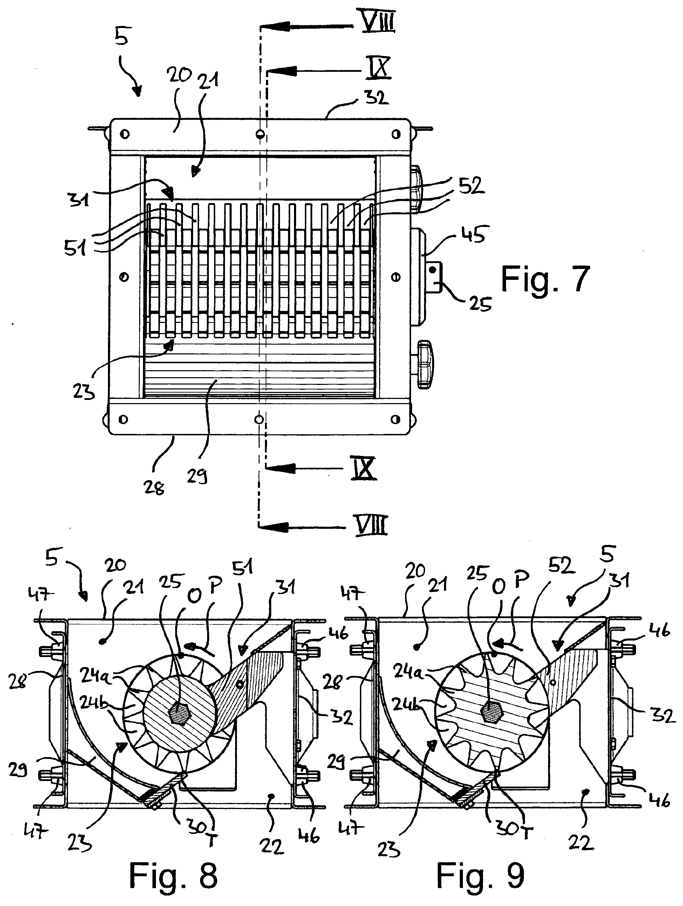

In den Fig. 5 bis 9 ist eine Dosiereinheit 5 mit einer zu der gemäß Fig. 2 bis 4 alternativen Ausführungsvariante einer Dichteinrichtung 31 wiedergegeben, wobei identische und wirkungsgleiche Komponenten mit denselben Bezugszeichen versehen und nicht nochmals erläutert sind. Die Nockenberge 24a und Nockentäler 24b der - wiederum aus einer Mehrzahl an Nockenscheiben oder -rädern aufgebauten - Nockenwalze sind in diesem Fall in Axialrichtung fluchtend angeordnet, wobei sie freilich auch entsprechend Fig. 2 bis 3 unter axialem Versatz angeordnet sein können, sofern dies gewünscht ist. Die in den Fig. 5 bis 9 dargestellte Ausführungsvariante unterscheidet sich von der gemäß Fig. 2 bis 4 durch die Ausgestaltung der Dichteinrichtung 31, deren Dichtungselemente 51, 52 sich im Falle der Fig. 5 bis 9 entlang einem Umfangsabschnitt der Nockenwalze 23 erstrecken, welcher etwas größer ist als der Umfangsabstand zweier in Umfangsrichtung benachbarter Nockenberge 24a der Nockenwalze (vgl. insbesondere Fig. 8 und 9). Die Dichtungselemente der Dichteinrichtung 31 umfassen einerseits in die in Axialrichtung benachbarter Nockenberge 24a bzw. -täler 24b der Nockenwalze 23 angeordneten Zwischenräume eingreifende Dichtungsvorsprünge 51 (siehe insbesondere Fig. 8), andererseits gegen das freie Ende der Nockenberge 24a der Nockenwalze 23 wirkende Dichtungsflächen 52 (vgl. insbesondere Fig. 9), welche jeweils alternierend angeordnet und an Nockenwalze 23 angepasst sind. Sowohl die zwischen die einzelnen Nockenscheiben bzw. -räder der Nockenwalze 23 eingreifenden Dichtungsvorsprünge 51 als auch die Dichtungsflächen 52 weisen an ihren freien, der Nockenwalze 23 zugewandten Enden eine zu letzterer komplementäre Form auf, wobei die Enden kreissegmentförmig mit den jeweiligen Radien der Nockenwalze 23 entsprechenden Radien ausgestaltet sind (siehe wiederum insbesondere Fig. 8 für die Dichtungsvorsprünge 51 sowie Fig. 9 für die Dichtungsflächen 52). Darüber hinaus entspricht die sich in Axialrichtung der Nockenwalze 23 erstreckende Breite der Dichtungsvorsprünge 51 etwa der Breite der axialen Zwischenräume zwischen den Nockenbergen 24a bzw. -tälern 24b der Nockenwalze 23 (vgl. insbesondere Fig. 6 und 7), während die sich in Axialrichtung der Nockenwalze 23 erstreckende Breite der Dichtungsflächen 52 etwa der Breite der Nockenberge 24a bzw. -täler 24b entspricht (vgl. ebenfalls insbesondere Fig. 6 und 7).

Obgleich nicht zeichnerisch dargestellt, kann der Dichteinrichtung 31 gemäß Fig. 5 bis 9 gleichfalls eine Reinigungseinrichtung 37, z.B. etwa entsprechend Fig. 2 bis 4, zugeordnet sein, welche allerdings lediglich in die Nockentäler 24b zwischen in Umfangsrichtung hintereinander angeordneten Nockenbergen 24a eingreifen sollte und nicht notwendigerweise auch in die axialen Zwischenräume zwischen Nockenbergen 24a bzw. -tälern 24b axial benachbarter Nockenscheiben bzw. -rädern der Nockenwalze eingreifen muss, da hier die Dichtungsvorsprünge 51 der Dichteinrichtung 31 eine entsprechende Reinigungsfunktion übernehmen können. Die Dichtungsvorsprünge 51 und Dichtungsflächen 52 können im Übrigen im Wesentlichen starr, z.B. aus Metallen, Kunststoffen oder Metall-/Kunststoffverbunden, ausgestaltet sein, wobei sie - sofern sie mit der Nockenwalze nach Art einer Gleitdichtung in Berührung stehen - vorzugsweise aus einem verschließfesten und reibungsarmen Kunststoffmaterial, wie beispielsweise Polytetrafluorethylen (PTFE), gefertigt oder mit einem solchen beschichtet sein können.

Das Vorhandensein der erfindungsgemäßen Dichteinrichtung 31 ermöglicht insbesondere eine Anordnung des Einlasses 21 in Bezug auf den Auslass 22 derart, dass zumindest ein Abschnitt der vertikalen Projektion der Fläche des Auslasses 22 - hier: die gesamte vertikal Projektion des Auslasses 22 - mit der vertikalen Projektion der Fläche des Einlasses 21 überlappt, d.h. der Auslass 22 ist mit seiner gesamten Fläche vertikal unterhalb des Einlasses 21 angeordnet, wobei die Dichteinrichtung 31 gleichwohl sicherstellt, dass das Streugut einlassseitig nicht über die Oberseite der Nockenwalze 23 hinweg in den Auslass 22 gelangen kann. Wie aus den Zeichnungen gemäß Fig. 2 bis 9 ersichtlich, erstreckt sich der Einlass 21 dabei in den vorliegenden Fällen im Wesentlichen über den gesamten Querschnitt des Dosiergehäuses 20, während sich der Auslass 22 über mehr als 50% des Querschnittes des Dosiergehäuses 20 zwischen der Dosierwanne 29 und der die Dichteinrichtung 31 tragenden Seitenwand 32 erstreckt.

Auf diese Weise ist es ferner möglich, die Dosiereinheit 5 nicht nur für die Dosierung von Streugut, wie beispielsweise Dünger, sondern auch für die Dosierung von Saatgut zu verwenden, welches aufgrund seiner hohen Empfindlichkeit gegen mechanische Einwirkungen üblicherweise nicht mittels Nockenwalzen 23, sondern mit andersartigen Dosierwalzen, wie insbesondere Zellenradwalzen (vornehmlich für Normalsaat), Zellenradsegment-, Loch- oder Nutenwalzen (vornehmlich für Feinsaat) dosiert werden sollte, wobei es im Hinblick auf eine quantitativ zuverlässige Dosierung entscheidend ist, dass das Saatgut von oben auf die Dosierwalze aufgegeben wird, um die Zellen der Zellenrad- oder Zellenradsegmentwalze bzw. die Nuten oder Löcher der Nuten- oder Lochwalze gänzlich auszufüllen.

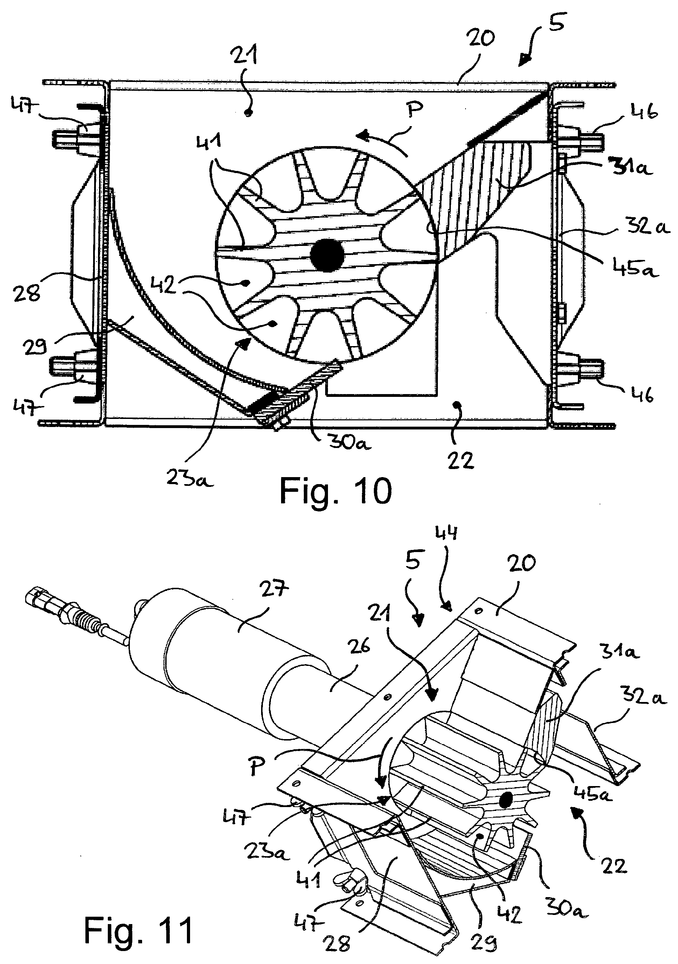

In den Fig. 10 und 11 ist dieselbe Dosiereinheit 5 zur Dosierung von Saatgut - hier: beispielsweise Normalsaat - gezeigt. Wie aus Fig. 10 und 11 ersichtlich, ist zu diesem Zweck einerseits die Nockenwalze 23 gegen eine andersartige Dosierwalze in Form einer nicht durch die Ansprüche erfasste Zellenradwalze 23a ausgetauscht worden, welche eine Mehrzahl an zwischen umfangsseitig vorstehenden Stegen 41 angeordnete Zellen 42 besitzt. Um in einfacher und schneller Weise für einen solchen Austausch der Dosierwalzen 23, 23a sorgen zu können, ist die Nockenwalze 23 wie auch die Zellenradwalze 23a herausnehmbar in dem Dosiergehäuse 20 gelagert, was beim vorliegenden Ausführungsbeispiel dadurch bewerkstelligt ist, dass sowohl die Nockenwalze 23 (Fig. 2 bis 9) als auch die Zellenradwalze (Fig. 10 und 11) an zwei entgegengesetzten Seitenwänden 43, 44 (siehe insbesondere Fig. 3; Fig. 5 und 6; Fig. 11) gelagert ist, wobei die dem Antrieb 27 der Nocken- 23 bzw. Zellenradwalze 23a abgewandte Lagerung 45 (siehe insbesondere Fig. 3; Fig. 5 und 6) und die dem Antrieb 27 der Nocken- 23 bzw. Zellenradwalze 23a zugewandte Lagerung (in den Zeichnungen nicht erkennbar) abnehmbar und gegen die Lagerung der jeweils anderen Dosierwalze 23a, 23 austauschbar ist.

Darüber hinaus ist die Seitenwand 32 des Dosiergehäuses 20 gemäß Fig. 2 bis 4 bzw. gemäß Fig. 3 bis 9, welche die Dichteinrichtung 31 und vorzugsweise auch die Reinigungseinrichtung 37 trägt, gegen eine weitere Seitenwand 32a (Fig. 10 und 11) austauschbar, wobei die weitere Seitenwand 32a gemäß Fig. 10 und 11 eine weitere, zur einlassseitigen Abdichtung der Zellenradwalze 23a ausgebildete Dichteinrichtung 31a umfasst. Letztere weist beispielsweise einen in Richtung der Zellenradwalze 23a vorstehenden und gegen einen Umfangsabschnitt derselben anliegenden Dichtungsblock auf, welcher sich um einen Umfangsabschnitt der Zellenradwalze 23a erstreckt und dessen der Zellenradwalze 23a zugewandte Dichtfläche 45a komplementär zum Außenumfang der Zellenradwalze 23a ausgestaltet ist, wobei seine Erstreckung in Umfangsrichtung mindestens dem Abstand zweier Stege 41 der Zellenradwalze 23a entspricht. Die Seitenwände 32, 32a sind zwecks eines einfachen manuellen Austausches beispielsweise mittels Schrauben 46 an dem Dosiergehäuse 20 festgelegt.

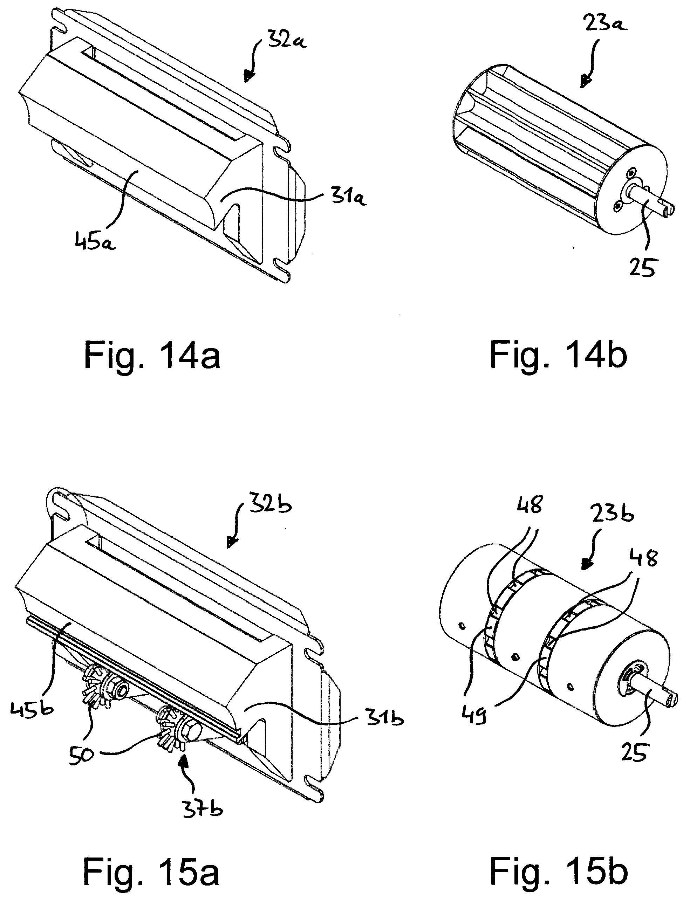

Während Fig. 12a nochmals eine perspektivische Detailansicht der der Nockenradwalze 23 (Fig. 12b) zugeordneten Seitenwand 32 mit der Dichteinrichtung 31 und der Reinigungseinrichtung 37 gemäß Fig. 2 bis 4 zeigt, zeigt Fig. 13a nochmals eine perspektivische Detailansicht der der Nockenradwalze 23 (Fig. 13b) zugeordneten Seitenwand 32 mit der Dichteinrichtung 31 (ohne Reinigungseinrichtung) gemäß Fig. 5 bis 9. Fig. 14a zeigt nochmals eine perspektivische Detailansicht der der Zellenradwalze 14a (Fig. 14b) zugeordneten Seitenwand 32a mit der weiteren Dichteinrichtung 31a gemäß Fig. 10 und 11.

Ferner kann beispielsweise auch die die Dosierwanne 29 mit der endseitig hieran festgelegten Dichtlippe 30 tragende Seitenwand 28 gemäß Fig. 2 bis 9, z.B. wiederum mittels Schrauben 47, austauschbar an dem Dosiergehäuse 20 festgelegt sein, sofern andere Dosierwalzen, wie beispielsweise die nicht durch die Ansprüche erfasste Zellenradwalze 23a gemäß Fig. 10 und 11, und/oder das hiermit zu dosierende Saatgut eine andersartige Dichtlippe 30a (Fig. 10 und 11) erfordern sollten.

Selbstverständlich ist es auch möglich, die Dosiereinheit 5 mit weiteren Dosierwalzen, wie insbesondere andersartigen Nocken-, Zellenrad-, Zellenradsegment-, Loch-, Nutenwalzen und dergleichen, sowie mit hierfür geeigneten Dicht- und gegebenenfalls Reinigungseinrichtungen zu versehen, um der Dosiereinheit 5 praktisch beliebige Anwendungsgebiete zu erschließen. Rein exemplarisch ist in diesem Zusammenhang in Fig. 15b ein Ausführungsbeispiel einer insbesondere zur Dosierung von Feinsaat geeigneten aber nicht durch die Ansprüche erfassten Zellenradsegmentwalze 23b wiedergegeben, welche eine Mehrzahl an Zellensegmenten 48 aufweist, die beim vorliegenden Ausführungsbeispiel entlang zweier, sich um den Umfang der Zellenradsegmentwalze 23b herum erstreckender Zellenradsegmentscheiben 49 angeordnet sind, welche drehfest mit der sie tragenden Welle 25 verbunden sind, während der Korpus der übrigen Walze 23b beispielsweise feststehend, d.h. nicht mit den Zellenradsegmentscheiben 49 mitdrehend, sein kann und der Korpus der übrigen Walze 23b insbesondere mit den Zellenradsegmentscheiben 29 fluchtet. Wie aus Fig. 15a ersichtlich, entspricht die der Zellenradsegmentwalze 23b zugeordnete, von einer weiteren, austauschbaren Seitenwand 32b getragene Dichteinrichtung 31b im Wesentlichen der gemäß Fig. 14a, wobei deren der Zellenradsegmentwalze 23b zugewandte Dichtfläche 45b komplementär zum Außenumfang der Zellenradsegmentwalze 23b ausgestaltet ist und ihre Erstreckung in Umfangsrichtung mindestens dem Umfangsabstand zweier Zellensegmente 48 der Zellenradsegmentscheiben 49 entspricht.

Wie weiterhin der Fig. 15a zu entnehmen ist, können den weiteren Dosierwalzen - wie hier: der Zellenradsegmentwalze 23b - weitere Reinigungseinrichtungen 37b zugeordnet sein, welche insbesondere ebenfalls an der austauschbaren Seitenwand 37b festgelegt sind. Im vorliegenden Fall besitzt die Reinigungseinrichtung 37b ein Paar von Bürsten 50, welche im Montagezustand (nicht gezeigt) in die Zellensegmente 48 der Zellenradsegmentwalze 23b eingreifen und hierin gegebenenfalls zurückgebliebenes Saatgut mechanisch zu entfernen vermögen. Selbstverständlich sind beliebige weitere, für verschiedenartiges Streu- und/oder Saatgut geeignete Dosierwalzen einschließlich hieran angepasster Dicht- und gegebenenfalls Reinigungseinrichtungen denkbar.

## Patentansprüche

1. Dosiereinheit (5) für eine Verteilmaschine, insbesondere in Form einer Streu- und/oder Sämaschine, mit einer drehangetriebenen Nockenwalze (23), zwischen deren in Axialrichtung nebeneinander angeordneten Nockenbergen (24a) axiale Zwischenräume gebildet sind und welche in einem Dosiergehäuse (20) mit einem an dessen Oberseite angeordneten Einlass (21) und einer an dessen Unterseite angeordneten Auslass (22) gelagert ist, **dadurch gekennzeichnet, dass** die Nockenwalze (23) einlassseitig mittels einer Dichteinrichtung (31) gegen eine Seitenwand (32) des Dosiergehäuses (20) abgedichtet ist, wobei sich die Dichteinrichtung (31) in Axialrichtung der Nockenwalze (23) erstreckt und eine Mehrzahl an Dichtungselementen aufweist, welche sich einerseits zumindest bis zu dem freien Ende der Nockenberge (24a) der Nockenwalze (23), andererseits zumindest bis zum Grund der zwischen in Axialrichtung benachbarter Nockenberge (24a) der Nockenwalze (23) angeordneten Zwischenräume erstrecken.

2. Dosiereinheit nach Anspruch 1, **dadurch gekennzeichnet, dass** die Dichtungselemente der Dichteinrichtung (31) von gegen die Nockenwalze (23) anliegenden, elastischen Dichtungsfingern (33), insbesondere aus wenigstens einem elastisch nachgiebigen Kunststoffmaterial, gebildet sind, deren Länge derart bemessen ist, dass sie sich sowohl zumindest bis zum Grund der zwischen in Axialrichtung benachbarter Nockenberge (24a) der Nockenwalze (23) angeordneten Zwischenräume als auch zumindest bis in den Grund der Nockentäler (24b) zwischen den in Umfangsrichtung der Nockenwalze (23) hintereinander angeordneten Nockenbergen (24a) erstrecken.

3. Dosiereinheit nach Annspruch 2, **dadurch gekennzeichnet, dass** die Dichtungsfinger (33) unter einem endlichen Winkel (α) in Bezug auf die Radialrichtung der Nockenwalze (23) in Drehrichtung (P) der Nockenwalze (23) geneigt angeordnet sind, wobei der Neigungswinkel (α) insbesondere zwischen 0° und 60°, vorzugsweise zwischen 10° und 50°, beispielsweise zwischen 20° und 40°, beträgt.

4. Dosiereinheit nach Anspruch 1, **dadurch gekennzeichnet, dass** sich die Dichtungselemente der Dichteinrichtung (31) entlang einem Umfangsabschnitt der Nockenwalze (23) erstrecken, welcher zumindest dem Umfangsabstand zweier in Umfangsrichtung benachbarter Nockenberge (24a) der Nockenwalze (23) entspricht oder diesen insbesondere übertrifft, wobei die Dichtungselemente einerseits in die in Axialrichtung benachbarter Nockenberge (24a) der Nockenwalze (23) angeordneten Zwischenräume eingreifende Dichtungsvorsprünge (51), andererseits gegen das freie Ende der Nockenberge (24a) der Nockenwalze (23) wirkende Dichtungsflächen (52) aufweisen.

5. Dosiereinheit nach Anspruch 4, **dadurch gekennzeichnet, dass**
- die Dichtungsvorsprünge (51) der Dichteinrichtung (31) an ihren freien, den axialen Zwischenräumen zwischen den Nockenbergen (24a) der Nockenwalze (23) zugewandten Enden eine zum Grund der Zwischenräume komplementäre Form besitzen, insbesondere kreisbogenförmig ausgestaltet sind; und/oder
- die Dichtungsflächen (52) der Dichteinrichtung (31) an ihren freien, den freien Enden der Nockenberge (24a) der Nockenwalze (23) zugewandten Enden eine zum Außenumfang der Nockenberge (24a) komplementäre Form besitzen, insbesondere kreisbogenförmig ausgestaltet sind.

6. Dosiereinheit nach Anspruch 4 oder 5, **dadurch gekennzeichnet, dass**
- die sich in Axialrichtung der Nockenwalze (23) erstreckende Breite der Dichtungsvorsprünge (51) der Dichteinrichtung (31) komplementär zur Breite der axialen Zwischenräume zwischen den Nockenbergen (24a) der Nockenwalze ist; und/oder
- die sich in Axialrichtung der Nockenwalze (23) erstreckende Breite der Dichtungsflächen (52) der Dichteinrichtung (31) komplementär zur Breite der Nockenberge (24a) ist.

7. Dosiereinheit nach einem der Ansprüche 1 bis 6, **dadurch gekennzeichnet, dass** die Dichteinrichtung (31) in einem Umfangsbereich der Nockenwalze (23) angeordnet ist, welcher - in Drehrichtung (P) der Nockenwalze (23) betrachtet - dem oberen Punkt (O) der Nockenwalze (23) vorgeordnet ist, wobei die Dichteinrichtung (31) insbesondere in einem Umfangsbereich der Nockenwalze (23) zwischen deren oberem Punkt (O) und deren der Seitenwand (32) des Dosiergehäuses (20), gegen welche die Dichteinrichtung (31) die Nockenwalze (23) abdichtet, nächstliegendem Punkt (N) angeordnet ist.

8. Dosiereinheit nach einem der Ansprüche 1 bis 7, **dadurch gekennzeichnet, dass** der Dichteinrichtung (31) eine Reinigungseinrichtung (37) zugeordnet ist, welche insbesondere - in Drehrichtung (P) der Nockenwalze (23) betrachtet - der Dichteinrichtung (31) vorgeordnet ist.

9. Dosiereinheit nach Anspruch 8, **dadurch gekennzeichnet, dass** die Reinigungseinrichtung (37)
- eine Mehrzahl an gegen die Nockenwalze (23) anliegende, elastische Reinigungsfinger (38) aufweist, welche sich zumindest bis in den Grund der Nockentäler (24b) zwischen den in Umfangsrichtung der Nockenwalze (23) hintereinander angeordneten Nockenbergen (24a) erstrecken; und/oder
- eine Mehrzahl an in die Zwischenräume zwischen in Axialrichtung nebeneinander angeordnete Nockenberge (24a) der Nockenwalze (23) eingreifende Reinigungsstifte (39) aufweist,
wobei sich die Reinigungsfinger (38) und/oder die Reinigungsstifte (39) insbesondere im Wesentlichen in Radialrichtung der Nockenwalze (23) erstrecken oder unter einem endlichen Winkel (β) von höchstens 20° in Bezug auf die Radialrichtung der Nockenwalze (23) in Drehrichtung (P) der Nockenwalze (23) geneigt angeordnet sind.

10. Dosiereinheit nach einem der Ansprüche 1 bis 9, **dadurch gekennzeichnet, dass** zumindest ein Abschnitt der vertikalen Projektion der Fläche des Auslasses (22), insbesondere die gesamte vertikale Projektion der Fläche des Auslasses (22), des Dosiergehäuses (20) mit der vertikalen Projektion der Fläche des Einlasses (21) des Dosiergehäuses (20) überlappt.

11. Dosiereinheit nach einem der Ansprüche 1 bis 10, **dadurch gekennzeichnet, dass** die Dichteinrichtung (31) und gegebenenfalls die Reinigungseinrichtung (37) an der Seitenwand (32) des Dosiergehäuses (20), gegen welche die Dichteinrichtung (31) die Nockenwalze (23) abdichtet, festgelegt ist bzw. sind.

12. Dosiereinheit nach Anspruch 11, **dadurch gekennzeichnet, dass** die Nockenwalze (23) herausnehmbar in dem Dosiergehäuse (20) gelagert ist und
- die Dichteinrichtung (31) abnehmbar an der Seitenwand (32) des Dosiergehäuses (20) festgelegt ist, wobei die Dichteinrichtung (31) insbesondere gegen wenigstens eine weitere Dichteinrichtung (31a, 31b) austauschbar ist, welche zur Abdichtung gegen eine weitere, andersartige Dosierwalze (23a, 23b) ausgebildet ist; und/oder
- die die Dichteinrichtung (31) tragende Seitenwand (32) austauschbar an dem Dosiergehäuse (20) festgelegt ist, wobei die Seitenwand (32) insbesondere gegen wenigstens eine weitere Seitenwand (32a, 32b) mit einer weiteren Dichteinrichtung (31a, 31b) austauschbar ist, welche zur Abdichtung gegen eine weitere, andersartige Dosierwalze (23a, 23b) ausgebildet ist.

13. Dosiereinheit nach Anspruch 12, **dadurch gekennzeichnet, dass** es sich bei der weiteren Dichteinrichtung (31a, 31b) um einen gegen einen Umfangsabschnitt der weiteren Dosierwalze (23a, 23b), insbesondere aus der Gruppe Zellenradwalze (23a), Zellenradsegmentwalze (23b), Lochwalze und Nutenwalze, anliegenden oder in Richtung des Umfangs der weiteren Dosierwalze (23a, 23b) vorstehenden und von dieser durch einen Spalt beabstandeten Dichtungsblock handelt, welcher sich um einen Umfangsabschnitt der weiteren Dosierwalze (23a, 23b) erstreckt und dessen der weiteren Dosierwalze (23a, 23b) zugewandte Dichtfläche (45a, 45b) insbesondere komplementär zum Außenumfang der weiteren Dosierwalze (23a, 23b) ist.

14. Dosiereinheit nach einem der Ansprüche 1 bis 13, **dadurch gekennzeichnet, dass** die Nockenwalze (23) an zwei entgegengesetzten Seitenwänden (43, 44) des Dosiergehäuses (20) gelagert ist, wobei die einem Antrieb (27) der Nockenwalze (23) abgewandte Lagerung und/oder die einem Antrieb (27) der Nockenwalze (23) zugewandte Lagerung der Nockenwalze (23) abnehmbar und insbesondere gegen eine weitere Lagerung einer weiteren Dosierwalze (23a, 23b) austauschbar ist.

15. Dosiereinheit nach einem der Ansprüche 1 bis 14, **dadurch gekennzeichnet, dass** die der Seitenwand (32) des Dosiergehäuses (20), gegen welche die Dichteinrichtung (31) die Nockenwalze (23) abdichtet, entgegengesetzte Seitenwand (28) des Dosiergehäuses (20) eine Dosierwanne (29) umfasst, welche sich von dieser Seitenwand (28) bis auf ein Höhenniveau unterhalb der Nockenwalze (23) erstreckt und dabei den Zwischenraum zwischen dieser Seitenwand (28) und der Nockenwalze (23) in Drehrichtung (P) der Nockenwalze (23) verschmälert, wobei insbesondere
- die Dosierwanne (29) austauschbar an der Seitenwand (28) des Dosiergehäuses (20) und/oder
- die die Dosierwanne (29) tragende Seitenwand (28) austauschbar an dem Dosiergehäuse (20)
festgelegt ist.

16. Dosiereinheit nach einem der Ansprüche 1 bis 15, **dadurch gekennzeichnet, dass** die Nockenwalze (23) auslassseitig mit einer sich in Axialrichtung der Nockenwalze (23) erstreckenden Dichtlippe (30) in Kontakt steht, welche insbesondere
- austauschbar an einer Seitenwand (28) des Dosiergehäuses (20), welche entgegengesetzt zu der die Dichteinrichtung (31) tragenden Seitenwand (32) angeordnet ist, und/oder
- an einer austauschbaren Seitenwand (28) des Dosiergehäuses (20), welche entgegengesetzt zu der die Dichteinrichtung (31) tragenden Seitenwand (32) angeordnet ist,
festgelegt ist.

17. Verteilmaschine, insbesondere in Form einer Streu- und/oder Sämaschine, mit wenigstens einem Vorratsbehälter (1), wenigstens einer unterhalb des Vorratsbehälters (1) angeordneten Dosiereinheit (5) sowie wenigstens einem der Dosiereinheit (5) nachgeordneten Verteilorgan, **dadurch gekennzeichnet, dass** es sich bei der wenigstens einen Dosiereinheit (5) um eine Dosiereinheit (5) gemäß einem der Ansprüche 1 bis 16 handelt.

## Claims

1. Metering unit (5) for a distribution machine, in particular in the form of a spreader and/or seeder, with a rotationally driven cam roller (23), between the cam peaks (24a) of which, which are arranged next to one another in the axial direction, axial intermediate spaces are formed, and which is mounted in a metering housing (20) having an inlet (21) arranged on its upper side and an outlet (22) arranged on its lower side, **characterized in that** the cam roller (23) is sealed off on the inlet side from a side wall (32) of the metering housing (20) by means of a sealing device (31), wherein the sealing device (31) extends in the axial direction of the cam roller (23) and has a plurality of sealing elements which extend, on the one hand, at least as far as the free end of the cam peaks (24a) of the cam roller (23) and extend, on the other hand, at least as far as the base of the intermediate spaces arranged between cam peaks (24a), which are adjacent in the axial direction, of the cam roller (23).

2. Metering unit according to Claim 1, **characterized in that** the sealing elements of the sealing device (31) are formed by elastic sealing fingers (33) which bear against the cam roller (23), are composed in particular of at least an elastically flexible plastics material and the length of which is dimensioned in such a manner that said sealing fingers extend both at least as far as the base of the intermediate spaces arranged between cam peaks (24a), which are adjacent in the axial direction, of the cam roller (23) and at least as far as into the base of the cam troughs (24b) between the cam peaks (24a) arranged consecutively in the circumferential direction of the cam roller (23).

3. Metering unit according to Claim 2, **characterized in that** the sealing fingers (33) are arranged inclined at a finite angle (α) with respect to the radial direction of the cam roller (23) in the direction of rotation (P) of the cam roller (23), wherein the angle of inclination (α) is in particular between 0° and 60°, preferably between 10° and 50°, for example between 20° and 40°.

4. Metering unit according to Claim 1, **characterized in that** the sealing elements of the sealing device (31) extend along a circumferential portion of the cam roller (23), which circumferential portion corresponds at least to the circumferential distance between two cam peaks (24a), which are adjacent in the circumferential direction, of the cam roller (23) or in particular exceeds said circumferential distance, wherein the sealing elements firstly have sealing projections (51) which engage in the intermediate spaces arranged in the axial direction of adjacent cam peaks (24a) of the cam roller (23) and secondly have sealing surfaces (52) acting against the free end of the cam peaks (24a) of the cam roller (23).

5. Metering unit according to Claim 4, **characterized in that**
- the sealing projections (51) of the sealing device (31) have, at their free ends facing the axial intermediate spaces between the cam peaks (24a) of the cam roller (23), a shape which is complementary with respect to the base of the intermediate spaces, in particular are designed in the shape of an arc of a circle; and/or
- the sealing surfaces (52) of the sealing device (31) have at their free ends, which face the free ends of the cam peaks (24a) of the cam roller (23), a shape which is complementary with respect to the outer circumference of the cam peaks (24a), in particular are configured in the shape of an arc of a circle.

6. Metering unit according to Claim 4 or 5, **characterized in that**
- the width of the sealing projections (51) of the sealing device (31), which width extends in the axial direction of the cam roller (23), is complementary with respect to the width of the axial intermediate spaces between the cam peaks (24a) of the cam roller; and/or
- the width of the sealing surfaces (52) of the sealing device (31), which width extends in the axial direction of the cam roller (23), is complementary with respect to the width of the cam peaks (24a).

7. Metering unit according to one of Claims 1 to 6, **characterized in that** the sealing device (31) is arranged in a circumferential region of the cam roller (23), which circumferential region is arranged upstream of the upper point (O) of the cam roller (23), as viewed in the direction of rotation (P) of the cam roller (23), wherein the sealing device (31) is arranged in particular in a circumferential region of the cam roller (23) between the upper point (O) thereof and the point (N) thereof which is closest to the side wall (32) of the metering housing (20), with respect to which side wall the sealing device (31) seals off the cam roller (23).

8. Metering unit according to one of Claims 1 to 7, **characterized in that** the sealing device (31) is assigned a cleaning device (37) which in particular is arranged upstream of the sealing device (31), as viewed in the direction of rotation (P) of the cam roller (23).

9. Metering unit according to Claim 8, **characterized in that** the cleaning device (37)
- has a plurality of elastic cleaning fingers (38) which bear against the cam roller (23) and extend at least into the base of the cam troughs (24b) between the cam peaks (24a) arranged consecutively in the circumferential direction of the cam roller (23); and/or
- has a plurality of cleaning pins (39) which engage in the intermediate spaces between cam peaks (24a), which are arranged next to one another in the axial direction, of the cam roller (23),
wherein the cleaning fingers (38) and/or the cleaning pins (39) in particular extend substantially in the radial direction of the cam roller (23) or are arranged inclined at a finite angle (β) of at maximum 20° with respect to the radial direction of the cam roller (23) in the direction of rotation (P) of the cam roller (23).

10. Metering unit according to one of Claims 1 to 9, **characterized in that** at least one portion of the vertical projection of the area of the outlet (22), in particular the entire vertical projection of the area of the outlet (22), of the metering housing (20) overlaps with the vertical projection of the area of the inlet (21) of the metering housing (20).

11. Metering unit according to one of Claims 1 to 10, **characterized in that** the sealing device (31), and optionally the cleaning device (37), are or is secured on the side wall (32) of the metering housing (20), with respect to which side wall the sealing device (31) seals off the cam roller (23).

12. Metering unit according to Claim 11, **characterized in that** the cam roller (23) is mounted detachably in the metering housing (20), and
- the sealing device (31) is secured removably on the side wall (32) of the metering housing (20), wherein the sealing device (31) can be interchanged in particular for at least one further sealing device (31a, 31b) which is designed for sealing in relation to a further, different metering roller (23a, 23b); and/or
- the side wall (32) bearing the sealing device (31) is secured interchangeably on the metering housing (20), wherein the side wall (32) is in particular interchangeable for at least one further side wall (32a, 32b) having a further sealing device (31a, 31b) which is designed for sealing in relation to a further, different metering roller (23a, 23b).

13. Metering unit according to Claim 12, **characterized in that** the further sealing device (31a, 31b) is a sealing block which bears against a circumferential portion of the further metering roller (23a, 23b), in particular from the group consisting of cellular wheel roller (23a), cellular wheel segment roller (23b), perforated roller and grooved roller, or protrudes in the direction of the circumference of the further metering roller (23a, 23b) and is spaced apart therefrom by a gap, said sealing block extending around a circumferential portion of the further metering roller (23a, 23b) and the sealing surface (45a, 45b) of which, which faces the further metering roller (23a, 23b), is in particular complementary with respect to the outer circumference of the further metering roller (23a, 23b).

14. Metering unit according to one of Claims 1 to 13, **characterized in that** the cam roller (23) is mounted on two opposite side walls (43, 44) of the metering housing (20), wherein the mounting of the cam roller (23) that faces away from a drive (27) of the cam roller (23) and/or the mounting of the cam roller (23) that faces a drive (27) of the cam roller (23) is removable and in particular interchangeable for a further mounting of a further metering roller (23a, 23b).

15. Metering unit according to one of Claims 1 to 14, **characterized in that** the side wall (28) of the metering housing (20), which side wall is opposite the side wall (32) of the metering housing (20), with respect to which side wall the sealing device (31) seals off the cam roller (23), comprises a metering trough (29) which extends from said side wall (28) as far as a height level below the cam roller (23) and narrows the intermediate space between said side wall (28) and the cam roller (23) in the direction of rotation (P) of the cam roller (23), wherein in particular
- the metering trough (29) is secured interchangeably on the side wall (28) of the metering housing (20), and/or
- the side wall (28) bearing the metering trough (29) is secured interchangeably on the metering housing (20).

16. Metering unit according to one of Claims 1 to 15, **characterized in that** the cam roller (23) is in contact on the outlet side with a sealing lip (30) which extends in the axial direction of the cam roller (23) and in particular is secured
- interchangeably on a side wall (28) of the metering housing (20), which side wall is arranged opposite the side wall (32) bearing the sealing device (31), and/or
- on an interchangeable side wall (28) of the metering housing (20), which side wall is arranged opposite the side wall (32) bearing the sealing device (31).

17. Distribution machine, in particular in the form of a spreader and/or seeder, with at least one storage container (1), at least one metering unit (5) arranged below the storage container (1) and at least one distribution member arranged downstream of the metering unit (5), **characterized in that** the at least one metering unit (5) is a metering unit (5) according to one of Claims 1 to 16.

## Revendications

1. Unité de dosage (5) pour une machine de distribution, prenant notamment la forme d'une machine à épandre et/ou à semer, avec un rouleau de came (23) entraîné en rotation et entre les sommets de came (24a) disposés côte à côte dans la direction axiale duquel des espaces intermédiaires axiaux sont formés, ledit rouleau étant disposé dans un carter de dosage (20) avec une admission (21) disposée au niveau de son côté supérieur et un échappement (22) disposé au niveau de son côté inférieur, **caractérisée en ce que** le rouleau de came (23) est étanchéifié du côté d'admission par rapport à une paroi latérale (32) du carter de dosage (20) au moyen d'un dispositif d'étanchéité (31), le dispositif d'étanchéité (31) s'étendant dans la direction axiale du rouleau de came (23) et comportant une pluralité d'éléments d'étanchéité s'étendant d'une part au moins jusqu'à l'extrémité libre des sommets de came (24a) du rouleau de came (23) et d'autre part au moins jusqu'à la base des espaces intermédiaires disposés entre les sommets de came (24a), connexes dans la direction axiale, du rouleau de came (23).

2. Unité de dosage selon la revendication 1, **caractérisée en ce que** les éléments d'étanchéité du dispositif d'étanchéité (31) sont formés de doigts d'étanchéité (33) élastiques reposant contre le rouleau de came (23), notamment à partir d'au moins une matière plastique élastiquement souple, leur longueur étant calculée de telle sorte qu'ils s'étendent tant au moins jusqu'à la base des espaces intermédiaires disposés entre les sommets de came (24a), connexes dans la direction axiale, du rouleau de came (23) qu'au moins jusque dans la base des creux de came (24b), entre les sommets de came (24a) disposés les uns derrière les autres dans la direction circonférentielle du rouleau de came (23).

3. Unité de dosage selon la revendication 2, **caractérisée en ce que** les doigts d'étanchéité (33) sont disposés de façon inclinée suivant un angle (α) fini par rapport à la direction radiale du rouleau de came (23) dans la direction de rotation (P) du rouleau de came (23), l'angle d'inclinaison (α) étant notamment compris entre 0° et 60°, de préférence entre 10° et 50°, par exemple entre 20° et 40°.

4. Unité de dosage selon la revendication 1, **caractérisée en ce que** les éléments d'étanchéité du dispositif d'étanchéité (31) s'étendent le long d'une section circonférentielle du rouleau de came (23) correspondant au moins à la distance circonférentielle de deux sommets de came (24a), connexes dans la direction circonférentielle, du rouleau de came (23) ou la dépassant notamment, les éléments d'étanchéité comportant d'une part des saillies d'étanchéité (51) engrenant les espaces intermédiaires disposés dans les sommets de came (24a), connexes dans direction axiale, du rouleau de came (23) et d'autre part des surfaces d'étanchéité (52) agissant contre l'extrémité libre des sommets de came (24a) du rouleau de came (23).

5. Unité de dosage selon la revendication 4, **caractérisée en ce que** :
- les saillies d'étanchéité (51) du dispositif d'étanchéité (31) possèdent au niveau de leurs extrémités libres orientées vers les espaces intermédiaires axiaux, entre les sommets de came (24a) du rouleau de came (23), une forme complémentaire à la base des espaces intermédiaires et sont notamment configurées en forme d'arc de cercle ; et/ou
- les surfaces d'étanchéité (52) du dispositif d'étanchéité (31) possèdent au niveau de leurs extrémités libres orientées vers les extrémités libres des sommets de came (24a) du rouleau de came (23) une forme complémentaire à la circonférence extérieure des sommets de came (24a) et sont notamment configurées en forme d'arc de cercle.

6. Unité de dosage selon la revendication 4 ou 5, **caractérisée en ce que** :
- la largeur, s'étendant dans la direction axiale du rouleau de came (23), des saillies d'étanchéité (51) du dispositif d'étanchéité (31) est complémentaire à la largeur des espaces intermédiaires axiaux prévus entre les sommets de came (24a) du rouleau de came ; et/ou
- la largeur, s'étendant dans la direction axiale du rouleau de came (23), des surfaces d'étanchéité (52) du dispositif d'étanchéité (31) est complémentaire à la largeur des sommets de came (24a).

7. Unité de dosage selon l'une quelconque des revendications 1 à 6, **caractérisée en ce que** le dispositif d'étanchéité (31) est disposé dans une zone circonférentielle du rouleau de came (23) placée en amont du point supérieur (O) du rouleau de came (23) - considéré dans la direction de rotation (P) du rouleau de came (23), le dispositif d'étanchéité (31) étant notamment disposé dans une zone circonférentielle du rouleau de came (23) entre son point supérieur (O) et son point (N) suivant de la paroi latérale (32) du carter de dosage (20) par lequel le dispositif d'étanchéité (31) étanchéifie le rouleau de came (23).

8. Unité de dosage selon l'une quelconque des revendications 1 à 7, **caractérisée en ce qu'**un dispositif de nettoyage (37) est associé au dispositif d'étanchéité (31), ledit dispositif de nettoyage - considéré dans la direction de rotation (P) du rouleau de came (23) - étant notamment placé en amont du dispositif d'étanchéité (31).

9. Unité de dosage selon la revendication 8, **caractérisée en ce que** le dispositif de nettoyage (37) :
- comporte une pluralité de doigts de nettoyage (38) élastiques reposant contre le rouleau de came (23) et s'étendant au moins jusque dans la base des creux de came (24b) entre les sommets de came (24a) disposés les uns derrière les autres dans la direction circonférentielle du rouleau de came (23) ; et/ou
- comporte une pluralité de tiges de nettoyage (39) s'engrenant dans les espaces intermédiaires, entre les sommets de came (24a), disposés côte à côte dans la direction axiale, du rouleau de came (23) ;
les doigts de nettoyage (38) et/ou les tiges de nettoyage (39) s'étendant notamment pour l'essentiel dans la direction radiale du rouleau de came (23) ou étant disposés de façon inclinée suivant un angle (β) fini de tout au plus 20° par rapport à la direction radiale du rouleau de came (23), dans la direction de rotation (P) du rouleau de came (23).

10. Unité de dosage selon l'une quelconque des revendications 1 à 9, **caractérisée en ce qu'**au moins une section de la projection verticale de la surface de l'échappement (22), notamment la projection verticale totale de la surface de l'échappement (22), du carter de dosage (20) se chevauche avec la projection verticale de la surface de l'admission (21) du carter de dosage (20).

11. Unité de dosage selon l'une quelconque des revendications 1 à 10, **caractérisée en ce que** le dispositif d'étanchéité (31) et le cas échéant le dispositif de nettoyage (37) est fixé et/ou sont fixés au niveau de la paroi latérale (32) du carter de dosage (20) par laquelle le dispositif d'étanchéité (31) étanchéifie le rouleau de came (23).

12. Unité de dosage selon la revendication 11, **caractérisée en ce que** le rouleau de came (23) est disposé dans le carter de dosage (20) de façon à pouvoir en être retiré ; et
- le dispositif d'étanchéité (31) est fixé de façon amovible à la paroi latérale (32) du carter de dosage (20), le dispositif d'étanchéité (31) pouvant notamment être remplacé par au moins un autre dispositif d'étanchéité (31 a, 31 b) pour réaliser l'étanchéité par rapport à un autre rouleau de dosage (23a, 23b) de type différent ; et/ou
- la paroi latérale (32) supportant le dispositif d'étanchéité (31) est fixée de façon amovible au carter de dosage (20), la paroi latérale (32) pouvant notamment être remplacée par au moins une autre paroi latérale (32a, 32b) avec un autre dispositif d'étanchéité (31 a, 31 b) prévu pour réaliser l'étanchéité par rapport à un autre rouleau de dosage (23a, 23b) supplémentaire de type différent.

13. Unité de dosage selon la revendication 12, **caractérisée en ce que** l'autre dispositif d'étanchéité (31 a, 31 b) est un bloc d'étanchéité reposant contre une section circonférentielle de l'autre rouleau de dosage (23a, 23b), notamment sélectionné dans le groupe constitué par un rouleau de roue cellulaire (23a), un rouleau de segment de roue cellulaire (23b), un rouleau perforé et un rouleau rainuré ou saillant en direction de la circonférence de l'autre rouleau de dosage (23a, 23b) et espacé d'une fente par rapport à lui, ledit bloc s'étendant autour d'une section circonférentielle de l'autre rouleau de dosage (23a, 23b) et sa surface d'étanchéité (45a, 45b) orientée vers l'autre rouleau de dosage (23a, 23b) étant notamment complémentaire à la circonférence extérieure de l'autre rouleau de dosage (23a, 23b).

14. Unité de dosage selon l'une quelconque des revendications 1 à 13, **caractérisée en ce que** le rouleau de came (23) est disposé au niveau de deux parois latérales (43, 44) opposées du carter de dosage (20), le palier opposé à un entraînement (27) du rouleau de came (23) et/ou le palier orienté vers l'entraînement (27) du rouleau de came (23) pouvant être retirés du rouleau de came (23) et pouvant notamment être remplacés par un autre palier d'un autre rouleau de dosage (23a, 23b).

15. Unité de dosage selon l'une quelconque des revendications 1 à 14, **caractérisée en ce que** la paroi latérale (28) du carter de dosage (20), opposée à la paroi latérale (32) du carter de dosage (20) par laquelle le dispositif d'étanchéité (31) étanchéifie le rouleau de came (23), comprend un baquet de dosage (29) s'étendant de cette paroi latérale (28) jusqu'à un niveau de hauteur inférieur au rouleau de came (23) et rétrécit en l'occurrence l'espace intermédiaire entre cette paroi latérale (28) et le rouleau de came (23) dans la direction de rotation (P) du rouleau de came (23) ; sachant que notamment :
- le baquet de dosage (29) est fixé de façon amovible à la paroi latérale (28) du carter de dosage (20) ; et/ou
- la paroi latérale (28) supportant le baquet de dosage (29) est fixée de façon amovible au carter de dosage (20).

16. Unité de dosage selon l'une quelconque des revendications 1 à 15, **caractérisée en ce que** le rouleau de came (23) est en contact du côté d'échappement avec une lèvre étanche (30) s'étendant notamment dans la direction axiale du rouleau de came (23), ladite lèvre étant notamment fixée :
- de façon amovible à une paroi latérale (28) du carter de dosage (20) disposée à l'opposé de la paroi latérale (32) supportant le dispositif d'étanchéité (31) ; et/ou
- à une paroi latérale (28) amovible du carter de dosage (20) disposée à l'opposé de la paroi latérale (32) supportant le dispositif d'étanchéité (31).

17. Machine de distribution, prenant notamment la forme d'une machine à épandre et//ou à semer, avec au moins un conteneur de réserve (1), au moins une unité de dosage (5) disposée sous le conteneur de réserve (1) ainsi qu'au moins un organe de distribution placé en aval de l'unité de dosage (5), **caractérisée en ce que** l'au moins une unité de dosage (5) est une unité de dosage (5) selon l'une quelconque des revendications 1 à 16.
